(19)

Europäisches
Patentamt
European
Patent Office
Office européen
des brevets

(11) **EP 4 510 588 A1**

(12) **EUROPEAN PATENT APPLICATION**
published in accordance with Art. 153(4) EPC

(43) Date of publication:
**19.02.2025 Bulletin 2025/08**

(21) Application number: **22936835.2**

(22) Date of filing: **12.04.2022**

(51) International Patent Classification (IPC):
**H04N 19/60** (2014.01)

(52) Cooperative Patent Classification (CPC):
**H04N 19/60**

(86) International application number:
**PCT/CN2022/086448**

(87) International publication number:
**WO 2023/197181 (19.10.2023 Gazette 2023/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **WANG, Fan
Dongguan, Guangdong 523860 (CN)**

(74) Representative: **RGTH
Patentanwälte PartGmbB
Neuer Wall 10
20354 Hamburg (DE)**

(54) **DECODING METHOD, ENCODING METHOD, DECODERS AND ENCODERS**

(57)     Embodiments of the present application provide a decoding method, an encoding method, a decoder, and an encoder. The decoding method includes: decoding a bitstream to obtain a first transform coefficient of a current block; performing first transform on the first transform coefficient to obtain a second transform coefficient of the current block; performing second transform on the second transform coefficient to obtain a residual block of the current block; predicting the current block based on a first intra prediction mode and a second intra prediction mode that are derived from a prediction mode derivation mode to obtain a prediction block of the current block; and obtaining a reconstructed block of the current block based on the prediction block of the current block and the residual block of the current block. The first transform is introduced on a basis of the prediction mode derivation mode and the second transform in the present application, so as to improve a decompression efficiency of the current block.

300

FIG. 16

**Description**

## TECHNICAL FIELD

Embodiments of the present application relate to the field of picture/video coding and decoding technologies, and in particular to, a decoding method, an encoding method, a decoder and an encoder.

## BACKGROUND

The digital video compression technology is mainly used to compress huge digital picture video data for facilitating transmission and storage. With the proliferation of videos on the Internet and people's increasing demand for the video definition, although existing digital video compression standards can implement video decompression technology, it is still necessary to pursue better digital video decompression technology to improve a compression efficiency.

## SUMMARY

The embodiments of the present application provide a decoding method, an encoding method, a decoder and an encoder, thereby improving the compression efficiency.

In a first aspect, the present application provides a decoding method, and the decoding method includes:

decoding a bitstream to obtain a first transform coefficient of a current block;
performing first transform on the first transform coefficient to obtain a second transform coefficient of the current block;
performing second transform on the second transform coefficient to obtain a residual block of the current block;
predicting the current block based on a first intra prediction mode and a second intra prediction mode that are derived from a prediction mode derivation mode to obtain a prediction block of the current block; and
obtaining a reconstructed block of the current block based on the prediction block of the current block and the residual block of the current block.

In a second aspect, the present application provides an encoding method, and the encoding method includes:

predicting a current block based on a first intra prediction mode and a second intra prediction mode that are derived from a prediction mode derivation mode to obtain a prediction block of the current block;
obtaining a residual block of the current block based on the prediction block of the current block;
performing third transform on the residual block of the current block to obtain a third transform coefficient of the current block;
performing fourth transform on the third transform coefficient to obtain a fourth transform coefficient of the current block; and
encoding the fourth transform coefficient.

In a third aspect, the present application provides a decoder, and the decoder includes:

a decoding unit configured to decode a bitstream to obtain a first transform coefficient of a current block;
a transform unit configured to:

perform first transform on the first transform coefficient to obtain a second transform coefficient of the current block; and
perform second transform on the second transform coefficient to obtain a residual block of the current block;
a prediction unit configured to predict the current block based on a first intra prediction mode and a second intra prediction mode that are derived from a prediction mode derivation mode to obtain a prediction block of the current block; and
a reconstruction unit configured to obtain a reconstructed block of the current block based on the prediction block of the current block and the residual block of the current block.

In a fourth aspect, the present application provides an encoder, and the encoder includes:

a prediction unit configured to predict a current block based on a first intra prediction mode and a second intra prediction mode that are derived from a prediction mode derivation mode to obtain a prediction block of the current block;

a residual unit configured to obtain a residual block of the current block based on the prediction block of the current block;

a transform unit configured to:

perform third transform on the residual block of the current block to obtain a third transform coefficient of the current block; and

perform fourth transform on the third transform coefficient to obtain a fourth transform coefficient of the current block; and

a coding unit configured to encode the fourth transform coefficient.

In a fifth aspect, the present application provides a decoder, and the decoder includes:

a processor configured to implement computer instructions; and

a computer-readable storage medium, where the computer-readable storage medium has stored the computer instructions therein, and the computer instructions are configured to be loaded and executed by the processor to implement the decoding method in the above first aspect or various implementations thereof.

In an implementation, there is one or more processors, and there is one or more memories.

In an implementation, the computer-readable storage medium may be integrated with the processor, or the computer-readable storage medium may be separated from the processor.

In a sixth aspect, the present application provides an encoder, and the encoder includes:

a processor configured to implement computer instructions; and

a computer-readable storage medium, where the computer-readable storage medium has stored the computer instructions therein, and the computer instructions are configured to be loaded and executed by the processor to implement the encoding method in the above second aspect or various implementations thereof.

In an implementation, there is one or more processors, and there is one or more memories.

In an implementation, the computer-readable storage medium may be integrated with the processor, or the computer-readable storage medium may be separated from the processor.

In a seventh aspect, the present application provides a computer-readable storage medium. The computer-readable storage medium has stored computer instructions therein, and the computer instructions, when read and executed by a processor of a computer device, enable the computer device to perform the decoding method involved in the above first aspect or the encoding method involved in the above second aspect.

In an eighth aspect, the present application provides a bitstream, and the bitstream is the bitstream involved in the above first aspect or the bitstream involved in the above second aspect.

Based on the above technical solutions, the first transform is introduced on a basis of the prediction mode derivation mode and the second transform in the present application, so as to improve a decompression efficiency of the current block.

BRIEF DESCRIPTION OF THE DRAWINGS

FIG. 1 is a schematic block diagram of an encoding framework provided in embodiments of the present application.
FIG. 2 is a schematic diagram of specific directions of 65 angular prediction modes provided in embodiments of the present application.
FIG. 3 is an example of reference samples of a wide-angular prediction mode provided in embodiments of the present application.
FIG. 4 is a schematic diagram of a matrix weighted intra prediction (MIP) mode provided in embodiments of the present application.
FIG. 5 is a schematic diagram of deriving a prediction mode based on decoder side intra mode derivation (DIMD) provided in embodiments of the present application.
FIG. 6 is a schematic diagram of deriving a prediction block based on DIMD provided in embodiments of the present application.
FIG. 7 is a schematic diagram of a template used by template based intra mode derivation (TIMD) provided in embodiments of the present application.

FIG. 8 is an example of weight maps corresponding to 64 weight derivation modes of a geometric partitioning mode (GPM) on a square block provided in embodiments of the present application.

FIG. 9 is an example of a partitioning line of a weight derivation mode provided in embodiments of the present application.

FIG. 10 is an example of weight maps corresponding to 56 weight derivation modes of angular weighted prediction (AWP) on a square block provided in embodiments of the present application.

FIG. 11 is a schematic diagram of GPM or AWP provided in embodiments of the present application.

FIG. 12 is an example of a basis picture of a discrete cosine transform 2 (DCT2) type provided in embodiments of the present application.

FIG. 13 is an example of low frequency non-separable transform (LFNST) provided in embodiments of the present application.

FIG. 14 is an example of a transform matrix group of LFNST provided in embodiments of the present application.

FIG. 15 is a schematic block diagram of a decoding framework provided in embodiments of the present application.

FIG. 16 is a schematic flowchart of a decoding method provided in embodiments of the present application.

FIG. 17 is a schematic flowchart of an encoding method provided in embodiments of the present application.

FIG. 18 is a schematic block diagram of a decoder provided in embodiments of the present application.

FIG. 19 is a schematic block diagram of an encoder provided in embodiments of the present application.

FIG. 20 is a schematic block diagram of an electronic device provided in embodiments of the present application.

## DETTAILED DESCRIPTION

Technical solutions in the embodiments of the present application will be described below with reference to the accompanying drawings.

The solutions provided in the embodiments of the present application may be applied to the field of digital video coding technologies, for example, including but not limited to: a picture coding and decoding field, a video coding and decoding field, a hardware video coding and decoding field, a dedicated circuit video coding and decoding field, and a real-time video coding and decoding field. In addition, the solutions provided in the embodiments of the present application may be combined with an audio video coding standard (AVS), a second generation AVS standard (AVS2), or a third generation AVS standard (AVS3), which include, for example, but are not limited to: an H.264/audio video coding (AVC) standard, an H.265/high efficiency video coding (HEVC) standard and an H.266/versatile video coding (VVC) standard. In addition, the solutions provided in the embodiments of the present application may be used to perform lossy compression on a picture, or may be used to perform lossless compression on a picture. The lossless compression may be visually lossless compression or mathematically lossless compression.

The video coding and decoding standards all adopt a block-based hybrid encoding framework. Each frame in a video is partitioned into square largest coding units (LCUs) or coding tree units (CTUs) of the same size (such as 128 × 128 or 64 × 64). Each largest coding unit or coding tree unit may be partitioned into rectangular coding units (CUs) according to a rule. The coding unit may further be partitioned into a prediction unit (PU), a transform unit (TU), and the like. The hybrid encoding framework includes a prediction module, a transform module, a quantization module, an entropy coding module, and an in-loop filter module. The prediction module includes intra prediction and inter prediction. The inter prediction includes motion estimation and motion compensation. Since there is a strong correlation between adjacent samples in a frame of a video, spatial redundancy between adjacent samples is eliminated using the intra prediction method in the video coding and decoding technology. The intra prediction predicts sample information within a current partitioning block by only referencing picture information of the same frame. Since there is a strong similarity between adjacent frames of a video, temporal redundancy between adjacent frames is eliminated using the inter prediction method in the video coding and decoding technology, thereby improving the coding efficiency. The inter prediction can use the motion estimation to search for motion vector information that best matches the current partitioning block by referencing picture information of different frames. The transform module converts prediction blocks into a frequency domain, the energy is redistributed, and by combining with quantization, information to which human eyes are insensitive may be removed to eliminate visual redundancy. The entropy coding module may eliminate character redundancy based on a current context model and probability information of a binary bitstream.

In a digital video coding process, an encoder may read a black-and-white picture or a color picture from an original video sequence, and then encode the black-and-white picture or the color picture. The black-and-white picture may include samples of luma component, and the color picture may include samples of chroma component. Optionally, the color picture may further include samples of luma component. A color format of the original video sequence may be a luma-chroma (YCbCr, YUV) format, a red-green-blue (RGB) format, or the like. Specifically, after reading a black-and-white picture or color picture, the encoder partitions the black-and-white picture or color picture into blocks, and performs the intra prediction or inter prediction on a current block to generate a prediction block of the current block. The prediction block is subtracted from an original block of the current block to obtain a residual block, the residual block is transformed and quantized to obtain a quantization coefficient matrix, and entropy coding is performed on the quantization coefficient matrix to be output to the bitstream. In a digital video decoding process, a decoding end performs the intra prediction or inter prediction on a current block to generate a prediction block of the current block. In addition, the decoding end decodes the bitstream to obtain the quantization coefficient matrix, performs inverse quantization and inverse transform on the quantization coefficient matrix to obtain the residual block, and adds the prediction block and the residual block to obtain a reconstructed block. The reconstructed block may be used to constitute a reconstruction picture, and the decoding end performs in-loop filter on the reconstruction picture based on the picture or the block to obtain a decoded picture.

The current block may be a current coding unit (CU) or a current prediction unit (PU).

It should be noted that an encoding end also needs to perform operations similar to those of the decoding end to obtain a decoded picture. The decoded picture may be used as a reference frame for inter prediction for subsequent frames. The block partitioning information, and prediction, transform, quantization, entropy coding, in-loop filter and other mode information or parameter information that are determined by the encoding end, if necessary, need to be output to the bitstream. The decoding end determines block partitioning information, and prediction, transform, quantization, entropy coding, in-loop filter and other mode information or parameter information that are the same as those of the encoding end by analyzing the existing information, thereby ensuring that the decoded picture obtained by the encoding end is the same as the decoded picture obtained by the decoding end. The decoded picture obtained by the encoding end is usually called a reconstruction picture. The current block may be partitioned into prediction units during prediction, and the current block may be partitioned into transform units during transform. The partitioning of the prediction units and the partitioning of the transform units may be the same or different. Of course, the above is only a basic process of a video codec under a block-based hybrid encoding framework. With the development of technology, some modules of the framework or some steps of the process may be optimized. The present application is applicable to the basic process of the video codec under the block-based hybrid encoding framework.

To facilitate understanding, an encoding framework provided in the present application is briefly introduced.

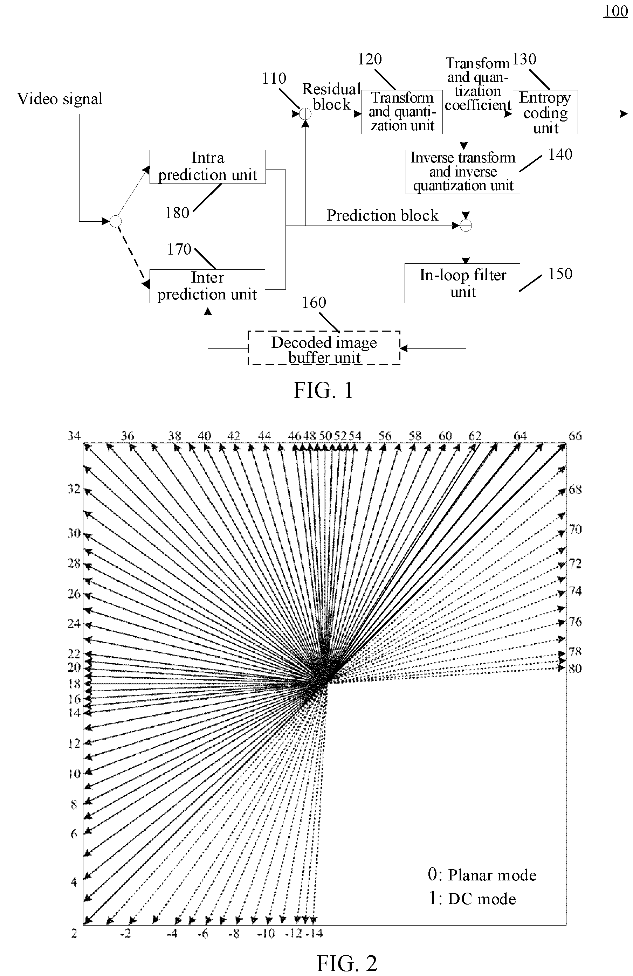

FIG. 1 is a schematic block diagram of an encoding framework 100 provided in embodiments of the present application.

As shown in FIG. 1, the encoding framework 100 may include an intra prediction unit 180, an inter prediction unit 170, a residual unit 110, a transform and quantization unit 120, an entropy coding unit 130, an inverse transform and inverse quantization unit 140 and an in-loop filter unit 150. Optionally, the encoding framework 100 may further include a decoded picture buffer unit 160. The encoding framework 100 may also be referred to as a hybrid framework coding mode.

The intra prediction unit 180 or the inter prediction unit 170 may perform prediction on an block to be encoded to output a prediction block. The residual unit 110 may calculate a residual block based on the prediction block and the block to be encoded, i.e., calculate a difference between the prediction block and the block to be encoded. The transform and quantization unit 120 is used to perform operations such as transform and quantization on the residual block to remove information to which the human eyes are insensitive, thereby eliminating the visual redundancy. Optionally, the residual block before transform and quantization by the transform and quantization unit 120 may be referred to as a time domain residual block, and the time domain residual block after transform and quantization by the transform and quantization unit 120 may be referred to as a frequency residual block or a frequency domain residual block. After receiving a transform and quantization coefficient output by the transform and quantization unit 120, the entropy coding unit 130 may output a bitstream based on the transform and quantization coefficient. For example, the entropy coding unit 130 may eliminate character redundancy based on a target context model and probability information of a binary bitstream. For example, the entropy coding unit 130 may be used for context-based adaptive binary arithmetic entropy coding (CABAC). The entropy coding unit 130 may also be referred to as a header information coding unit. Optionally, in the present application, the block to be encoded may also be referred to as an original block or a target block; the prediction block may also be referred to as a prediction block or a picture prediction block, or may be referred to as a prediction signal or prediction information; and the reconstructed block may also be referred to as a reconstruction block or a picture reconstructed block, or may be referred to as a reconstruction signal or reconstruction information. In addition, for the encoding end, the block to be encoded may also be referred to as an encoding block or an encoding block; and for the decoding end, the block to be encoded may also be referred to as a decoding block or a decoding block. The block to be encoded may be a CTU or a CU.

The encoding framework 100 performs the transform and quantization on the residual block obtained by calculating residual between the prediction block and the block to be encoded, and then transmits the residual block to the decoding end. Accordingly, after receiving and decoding the bitstream, the decoding end obtains a residual block through inverse transform and inverse quantization, and then obtains a reconstructed block by superimposing a prediction block predicted by the decoding end on the residual block.

It should be noted that the inverse transform and inverse quantization unit 140, the in-loop filter unit 150 and the decoded picture buffer unit 160 in the encoding framework 100 may be used to form a decoder. It is equivalent to the intra prediction unit 180 or the inter prediction unit 170 being able to predict the block to be encoded based on the existing reconstructed block, thereby ensuring consistent understanding of the reference frame by the encoding end and the decoding end. In other words, the encoder may replicate a processing loop of the decoder and thus may generate the same prediction as the decoding end. Specifically, the quantized transform coefficient replicates an approximate residual block at the decoding end through the inverse transform and inverse quantization of the inverse transform and inverse quantization unit 140. The approximate residual block plus the prediction block may pass through the in-loop filter unit 150 to smoothly filter a blocking effect caused by block-based processing and quantization. The block output by the in-loop filter unit 150 may be stored in the decoded picture buffer unit 160, so as to be used for prediction of subsequent pictures.

It should be understood that FIG. 1 is merely an example of the present application but should not be construed as the limitation on the present application.

For example, the in-loop filter unit 150 in the encoding framework 100 may include a deblocking filter (DBF) and a sample adaptive offset filter (SAO). The function of the DBF is to remove a blocking effect, and the function of the SAO is to remove a ringing effect. In other embodiments of the present application, the encoding framework 100 may adopt an in-loop filter algorithm based on a neural network to improve a compression efficiency of a video. In other words, the encoding framework 100 may be a video coding hybrid framework based on a deep learning neural network. In an implementation, on a basis of the deblocking filter and the sample adaptive offset filter, a model based on a convolutional neural network may be used to calculate a result after filtering samples. Network structures of the in-loop filter unit 150 on the luma component and the chroma component may be the same or different. Considering that the luma component contains more visual information, the luma component may also be used to guide filtering of the chroma component to improve a reconstruction quality of the chroma component.

The relevant contents of intra prediction and inter prediction will be described below.

For the inter prediction, the inter prediction can use the motion estimation to search for motion vector information that best matches the block to be encoded by referencing picture information of different frames, so as to eliminate temporal redundancy. The frames used for the inter prediction may be P frames and/or B frames, where the P frame refers to a forward prediction frame, and the B frame refers to a bidirectional prediction frame.

For the intra prediction, the intra prediction predicts sample information within the block to be encoded by only referencing picture information of the same frame, so as to eliminate spatial redundancy. The frame used for the intra prediction may be an I frame. For example, according to a coding order from left to right and from top to bottom, for an block to be encoded, an upper left block, an upper block and a left block may serve as reference information to predict the block to be encoded, and the block to be encoded also serves as reference information for a next block. In this way, an entire picture may be predicted. If a digital video input is in a color format (e.g., a YUV 4:2:0 format), every 4 samples in each picture frame of the digital video are composed of 4 Y components and 2 UV components, and the encoding framework may encode the Y components (i.e., luma blocks) and the UV components (i.e., chroma blocks) respectively. Similarly, the decoding end may also perform corresponding decoding according to the format.

For an intra prediction process, the intra prediction may predict the block to be encoded using an angular prediction mode and a non-angular prediction mode to obtain a prediction block; according to rate-distortion information calculated between the prediction block and the block to be encoded, an optimal prediction mode of the block to be encoded is screened out, and this prediction mode is transmitted to the decoding end via the bitstream; and the decoding end obtains the prediction mode by parsing, performs prediction to obtain a prediction block of a target decoding block, and superimposes the prediction block on a time domain residual block obtained through transmission of the bitstream, so as to obtain a reconstructed block.

After the development of digital video coding and decoding standards of generations, the non-angular prediction mode remains relatively stable, and includes a mean mode and a planar mode. The angular prediction mode is constantly improving with the evolution of digital video coding and decoding standards. By taking H series of international digital video coding standards as examples, the H.264/AVC standard only has 8 angular prediction modes and 1 non-angular prediction mode, and the H.265/HEVC is expanded to have 33 angular prediction modes and 2 non-angular prediction modes. In H.266/VVC, intra prediction modes are further expanded, and there are 67 traditional prediction modes and a non-traditional prediction mode, namely, matrix weighted intra prediction (MIP) mode for a luma block. The 67 traditional prediction modes include a planar mode, a direct current (DC) mode and 65 angular prediction modes. The planar mode is usually used to process some blocks with gradient textures; the DC mode, as the name suggests, is usually used to process some flat areas; and the angular prediction mode is usually used to process blocks with relatively obvious angle textures.

It should be noted that in the present application, the current block used for the intra prediction may be a square block or a rectangular block.

Furthermore, since the intra prediction blocks are all square, each angular prediction mode used has an equal probability. In a case where a length and a width of the current block are not equal, for a horizontal type of blocks (whose width is greater than a height), a probability of using a reference sample on the top is greater than a probability of using a reference sample on the left; and for a vertical type of blocks (whose height is greater than a width), a probability of using a reference sample on the top is less than a probability of using a reference sample on the left. Based on this, the present application introduces a wide-angular prediction mode. When a rectangular block is predicted, a traditional angular prediction mode is converted into the wide-angular prediction mode. A prediction angle range of a current block, when the wide-angular prediction mode is used to predict the rectangular block, is greater than a prediction angle range when the traditional angular prediction mode is used to predict the rectangular block. Optionally, when the wide-angular prediction mode is used, an index of the traditional angular prediction mode may be still used to send a signal. Accordingly, the decoding end may convert the traditional angular prediction mode into the wide-angular prediction mode after receiving the signal. Thus, the total number of the intra prediction modes and the intra mode encoding method remain unchanged, and the intra mode encoding method remains unchanged.

FIG. 2 is a schematic diagram of specific directions of 65 angular prediction modes provided in embodiments of the present application.

As shown in FIG. 2, an index 0 is used to indicate the planar mode, an index 1 is used to indicate the DC mode, and indexes -14 to 80 may be used to indicate different angular prediction modes, respectively. Specifically, indexes 2 to 66 are used to indicate traditional angular prediction modes, and indexes -1 to -14 and indexes 67 to 80 are used to indicate wide-angular prediction modes. In other words, the traditional intra prediction modes identified by the indexes 2 to 66 may be used to predict the square block, and the wide-angular prediction modes identified by the indexes -1 to -14 and 67 to 80 may be used to predict the rectangular block.

It should be understood that a prediction mode identified by an index x involved in the present application may also be referred to as a prediction mode x. For example, an intra prediction mode identified by the index 2 may also be referred to as an intra prediction mode 2.

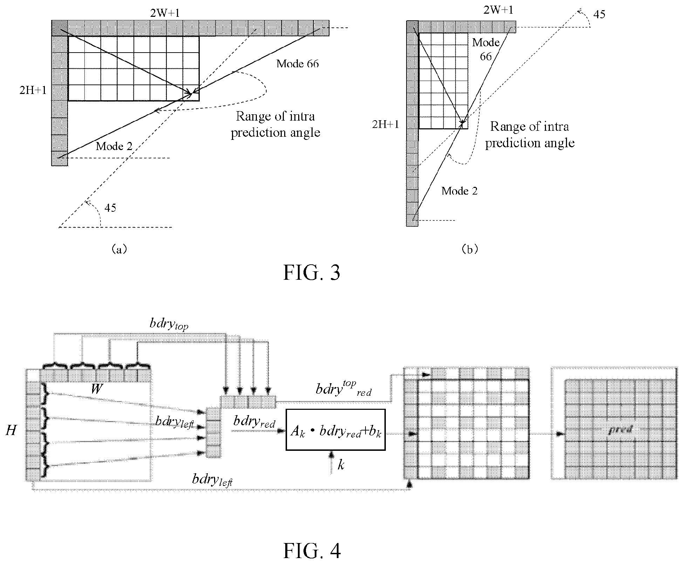

FIG. 3 is an example of reference samples of a wide-angular prediction mode provided in embodiments of the present application.

As shown in FIG. 3, in the wide-angular prediction mode, for a CU with a size W×H, the number of reference samples on the top of the CU is (2W+1), and the number of reference samples on the left of the CU is (2H+1). Specifically, as shown in (a) of FIG. 3, in a case of W>H (e.g., a CU of 8×4), there is a situation that points at a lower right corner of the CU cannot be indexed to reference samples for an intra prediction mode near an intra prediction mode 2 (larger than the intra prediction mode 2), while there is still a part of points that can be indexed to reference samples for an intra prediction mode near an intra prediction mode 66 (larger than the intra prediction mode 66). Therefore, it is necessary to replace some horizontal-like angle modes near the intra prediction mode 2 (larger than the intra prediction mode 2) with some vertical-like angle modes near the intra prediction mode 66 (larger than the intra prediction mode 66) to expand the prediction angle range. Similarly, as shown in (b) of FIG. 3, in a case of W<H (e.g., a CU of 4×8), there is a situation that a part of points cannot be indexed to reference samples for an intra prediction mode near the intra prediction mode 66 (smaller than the intra prediction mode 66), while there is still a part of points that can be indexed to reference samples for an intra prediction mode near the intra prediction mode 2 (smaller than the intra prediction mode 2). Therefore, it is necessary to replace some vertical-like angle modes near the intra prediction mode 66 (smaller than the intra prediction mode 66) with some horizontal-like angle modes near the intra prediction mode 2 (smaller than the intra prediction mode 2) to expand the prediction angle range.

In some cases, an intra prediction mode to be performed may be determined or selected based on a size of a current block. For example, the wide-angular prediction mode may be determined or selected based on the size of the current block to perform intra prediction on the current block. For example, in a case where the current block is a rectangular block (having different dimensions in width and height), the wide-angular prediction mode may be used to perform intra prediction on the current block. A ratio of the width to the height of the current block may be used to determine an angular prediction mode by which the wide-angular prediction mode is replaced and a replaced angular prediction mode. For example, when the current block is predicted, any intra prediction mode having an angle not exceeding the diagonal angle of the current block (from the lower left corner to the upper right corner of the current block) may be selected as the replaced angular prediction mode.

Other intra prediction modes involved in the present application will be described below.

(1) Matrix based intra prediction (MIP) mode

The MIP mode may also be referred to as the matrix weighted intra prediction mode. The process involved in the MIP mode may be divided into three main steps, namely a downsampling process, a matrix multiplication process and an upsampling process. Specifically, spatial adjacent reconstruction samples are downsampled through the downsampling process, then the downsampled sample sequence is used as an input vector of the matrix multiplication process (that is, an output vector of the downsampling process is used as the input vector of the matrix multiplication process), after that the input vector is multiplied with a preset matrix and then added with a bias vector, and the calculated sample vector is output; and the output vector of the matrix multiplication process is used as an input vector of the upsampling process, and a final prediction block is obtained by upsampling.

FIG. 4 is a schematic diagram of an MIP mode provided in embodiments of the present application.

As shown in FIG. 4, in the downsampling process, the MIP mode obtains an upper adjacent downsampling reconstruction sample vector $bdry_{top}$ by averaging upper adjacent reconstruction samples of a current coding unit, and obtains a left adjacent downsampling reconstruction sample vector $bdry_{left}$ by averaging left adjacent reconstruction samples of the current coding unit. After obtaining $bdry_{top}$ and $bdry_{left}$, $bdry_{top}$, and $bdry_{left}$ are used as an input vector $bdry_{red}$ of the matrix multiplication process. Specifically, a sample vector may be obtained through a top row vector $bdry^{top}_{red}$ based on $bdry_{red}$, $bdry_{left}$, and $(A_k \cdot bdry_{red} + b_k)$, where $A_k$ is a preset matrix, $b_k$ is a preset bias vector, and $k$ is an index of the MIP mode. After the sample vector is obtained, the sample vector is upsampled by linear interpolation to obtain a prediction sample block that matches the number of samples of the actual coding unit.

In other words, for predicting a block with a width of W and a height of H, MIP requires H reconstruction samples in a column on the left of the current block and W reconstruction samples in a row on the top of the current block as input. MIP generates a prediction block in the following three steps: reference samples averaging, matrix vector multiplication and interpolation. The core of MIP is the matrix vector multiplication, which may be considered as a process of generating the prediction block using input samples (reference samples) in a matrix multiplication manner. MIP provides a variety of matrices. Different prediction methods may be reflected in different matrices. The same input samples will get different results using different matrices. The processes of the reference samples averaging and the interpolation are a design that balances performance and complexity. For a block with a relatively large size, an effect similar to downsampling may be achieved by reference samples averaging, so that the input can be matched into a relatively small matrix; and the interpolation can achieve an upsampling effect. In this way, there is no need to provide a MIP matrix for each size of block, but only one or several matrices of specific sizes are provided. As the demand for compression performance increases and hardware capabilities improve, more complex MIPs may exist in the next generation of standards.

For the MIP mode, the MIP mode may be obtained by simplifying a neural network. For example, a matrix used in the MIP mode may be obtained based on training. Therefore, the MIP mode has a strong generalization ability and a prediction effect that traditional prediction modes cannot achieve. The MIP mode may be a model obtained by performing multiple complexity simplifications of hardware and software on a neural network-based intra prediction model. On the basis of a large number of training samples, a plurality of prediction modes represent a plurality of models and parameters, which can cover texture conditions of natural sequences well.

MIP is somewhat similar to the planar mode, but is obviously more complex and more flexible than the planar mode.

It should be noted that, for coding units with different block sizes, the number of MIP modes may be different. For example, for a coding unit with a size of $4 \times 4$, the MIP modes include 16 prediction modes; for a coding unit with a size of $8 \times 8$ and a width equal to 4 or a height equal to 4, the MIP modes include 8 prediction modes; and for coding units with other sizes, the MIP modes include 6 prediction modes. In addition, the MIP mode has a transposition function. For a prediction mode conforming to a current size, the MIP mode may try transposition calculation on the encoder side. Therefore, the MIP mode not only requires a flag bit to indicate whether the current coding unit uses the MIP mode, but also needs to transmit an extra transposition flag bit to the decoder if the current coding unit uses the MIP mode.

(2) Decoder side intra mode derivation (DIMD) mode

The main core point of the DIMD mode lies in that, for the intra prediction mode, the decoder uses the same method as the encoder to derive the intra prediction mode, so as to avoid transmission of an intra prediction mode index of a current coding unit in a bitstream, thereby saving bit overhead.

The specific process of the DIMD mode may be divided into the following two main steps.

In step 1, a prediction mode is derived.

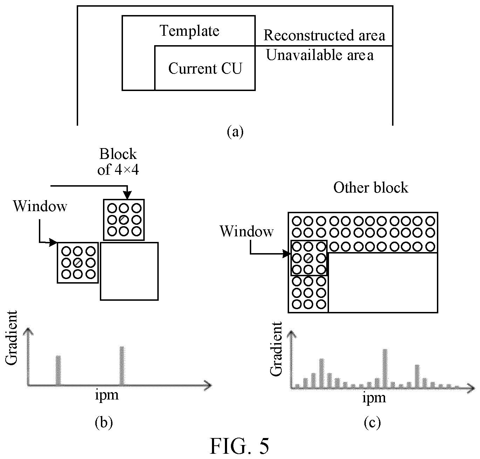

FIG. 5 is a schematic diagram of deriving a prediction mode based on DIMD provided in embodiments of the present application.

As shown in (a) of FIG. 5, DIMD derives the prediction mode using samples (reconstruction samples on the left and top of a current block) in a template in a reconstruction area. For example, the template may include three rows of adjacent reconstruction samples on the top of the current block, three columns of adjacent reconstruction samples on the left of the current block, and corresponding adjacent reconstruction samples on the upper left of the current block. Based on this, a plurality of gradient values may be determined in the template according to window(s) (e.g., a window shown in (a) of FIG. 5 or a window shown in (b) of FIG. 5), and each gradient value may be used to adapt an intra prediction mode (ipm) suitable for its gradient direction. Based on this, the encoder may use prediction modes adapted by the maximum and second maximum gradient values in the plurality of gradient values as the derived prediction modes. For example, as shown in (b) of FIG. 5, for a block with a size of $4 \times 4$, all samples whose gradient values need to be determined are analyzed and a corresponding histogram of gradients is obtained. For example, as shown in (c) of FIG. 5, for a block with any other size, all samples whose gradient values need to be determined are analyzed and a corresponding histogram of gradients is obtained. Then, prediction modes corresponding to the maximum and second maximum gradients in the histogram of gradients are used as the derived prediction modes.

Of course, the histogram of gradients in the present application is only an example for determining the derived prediction modes, and a specific implementation may adopt a variety of simple forms, which is not specifically limited in the present application. In addition, the present application does not limit the method for obtaining the histogram of gradients. For example, the histogram of gradients may be obtained using the Sobel operator or other methods.

**In** step 2, a prediction block is derived.

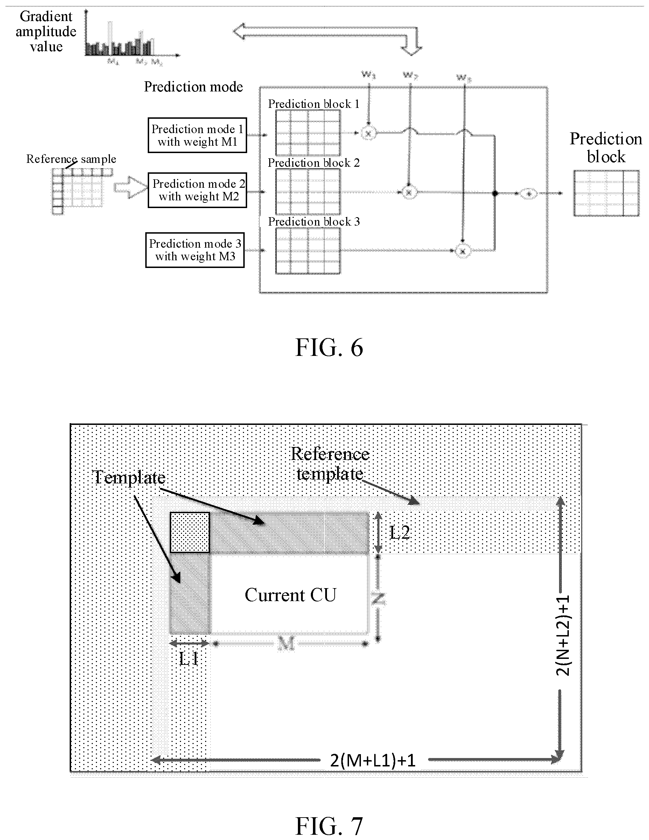

FIG. 6 is a schematic diagram of deriving a prediction block based on DIMD provided in embodiments of the present application.

As shown in FIG. 6, the encoder may weight prediction values of three intra prediction modes (a planar mode and two intra prediction modes derived based on DIMD). The codec obtains a prediction block of a current block using the same prediction block derivation method. It is assumed that a prediction mode corresponding to the maximum gradient value is a prediction mode 1, and a prediction mode corresponding to the second maximum gradient value is a prediction mode 2, the encoder determines the following two conditions:

whether a gradient of the prediction mode 2 is not 0; and
whether both the prediction mode 1 and the prediction mode 2 are not planar modes nor DC prediction modes.

If the above two conditions are not met simultaneously, only the prediction mode 1 is used to calculate a prediction sample value of the current block (that is, the prediction mode 1 is applied to a normal prediction process); otherwise, if the above two conditions are met, a weighted averaging method is used to derive the prediction block of the current block. The specific method is that the planar mode accounts for 1/3 of the weighted weight, the remaining 2/3 of the weighted weight is a total weight of the prediction mode 1 and the prediction mode 2 (for example, a gradient amplitude value of the prediction mode 1 is divided by a sum of a gradient amplitude value of the prediction mode 1 and a gradient amplitude value of the prediction mode 2 as a weighted weight of the prediction mode 1, and the gradient amplitude value of the prediction mode 2 is divided by the sum of the gradient amplitude value of the prediction mode 1 and the gradient amplitude value of the prediction mode 2 as a weighted weight of prediction mode 2), and the weighted averaging is performed on prediction blocks obtained based on the above three prediction modes (i.e., a prediction block 1, a prediction block 2 and a prediction block 3 obtained based on the planar mode, the prediction mode 1 and the prediction mode 2, respectively) to obtain the prediction block of the current coding unit. The decoder obtains the prediction block in the same steps.

In other words, the specific weight calculation in the above step 2 is as follows:

$$\text{Weight}(\text{PLANAR}) = 1/3;$$

$$\text{Weight}(\text{mode1}) = 2/3 * (\text{amp1} / (\text{amp1} + \text{amp2}));$$

and

$$\text{Weight}(\text{mode2}) = 1 - \text{Weight}(\text{PLANAR}) - \text{Weight}(\text{mode1}).$$

Mode1 and mode2 respectively represent the prediction mode 1 and the prediction mode 2, and amp1 and amp2 respectively represent the gradient amplitude value of the prediction mode 1 and the gradient amplitude value of the prediction mode 2. The DIMD mode need to transmit a flag bit to the decoder, and the flag bit is used to indicate whether the current coding unit uses the DIMD mode.

Of course, the above weighted averaging method is only an example of the present application, but should not be understood as a limitation on the present application.

In summary, DIMD uses gradient analysis of reconstruction samples to screen the intra prediction modes, and may weight two intra prediction modes and the planar mode according to the analysis result. The advantage of DIMD lies in that if the DIMD mode is selected for the current block, there is no need to indicate, in the bitstream, which specific intra prediction mode is used, and the decoder itself achieves derivation through the above process. Thus, overhead is saved to a certain extent.

(3) Template based intra mode derivation (TIMD) mode

The technical principle of the TIMD mode is similar to that of the above DIMD mode, and they both use the same operation of the codec to derive the prediction mode to save the transmission mode index overhead. The TIMD mode can be understood as two main parts. First, cost information of prediction modes is calculated according to a template, and prediction modes corresponding to the minimum cost and the second minimum cost are selected, where a prediction mode corresponding to the minimum cost is represented as a prediction mode 1, and a prediction mode corresponding to the second minimum cost is represented as a prediction mode 2. Then, if a ratio of a value (costMode2) of the second minimum cost to a value (costMode1) of the minimum cost meets a preset condition (e.g., costMode2 < 2*costMode1), weighted fusion may be performed on prediction blocks corresponding to the prediction mode 1 and the prediction mode 2 according to weights corresponding to the prediction mode 1 and the prediction mode 2 to obtain a final prediction block.

For example, the weights corresponding to the prediction mode 1 and the prediction mode 2 are determined according to the following method:

$$weight1 = costMode2 / (costMode1 + costMode2);$$

and

$$weight2 = 1 - weight1.$$

Weight1 is a weighted weight of a prediction block corresponding to the prediction mode 1, and weight2 is a weighted weight of a prediction block corresponding to the prediction mode 2. However, if the ratio of the value (costMode2) of the second minimum cost to the value (costMode1) of the minimum cost does not meet the preset condition, the weighted fusion between the prediction blocks is not performed, and the prediction block corresponding to the prediction mode 1 is the prediction block of TIMD.

It should be noted that when the TIMD mode is used to perform intra prediction on a current block, if the reconstruction sample template of the current block does not contain available adjacent reconstruction samples, the planar mode is selected for the TIMD mode to perform intra prediction on the current block (that is, the weighted fusion is not performed). Similar to the DIMD mode, the TIMD mode need to transmit a flag bit to the decoder to indicate whether the current coding unit uses the TIMD mode.

FIG. 7 is a schematic diagram of a template used by TIMD provided in embodiments of the present application.

As shown in FIG. 7, if a current block is a coding unit with a width equal to M and a height equal to N, and the encoder and the decoder may calculate a template of the current block by selecting a reference template (reference of template) of the current block based on a coding unit with a width equal to $(2(M + L1) + 1)$ and a height equal to $(2(N + L2) + 1)$. In this case, if the template of the current block does not contain available adjacent reconstruction samples, the planar mode is selected for the TIMD mode to perform intra prediction on the current block. For example, the available adjacent reconstruction samples may be samples adjacent to the left and top sides of the current CU in FIG. 7 (that is, there are no available reconstruction samples in an area with oblique line filled). That is, if there are no available reconstruction samples in the area with oblique line filled, the planar mode is selected for the TIMD mode to perform intra prediction on the current block.

Except for edge cases, when the current block is encoded and decoded, the left and top sides of the current block may theoretically obtain reconstruction values. That is, the template of the current block contains available adjacent reconstruction samples. In a specific implementation, the decoder may perform prediction on the template using a certain intra prediction mode, and compare the predicted value with the reconstruction value to obtain the cost of the intra prediction mode on the template, such as SAD, SATD and SSE. Since the template and the current block are adjacent, reconstruction samples in the template and samples in the current block are correlated. Therefore, performance of a prediction mode on the template may be used to estimate performance of this prediction mode on the current block. TIMD predicts some candidate intra prediction modes on the template to obtain costs of the candidate intra prediction modes on the template, and takes one or two intra prediction modes with the lowest cost as the intra prediction value(s) of the current block. If a difference between costs of the two intra prediction modes on the template is not large, weighted averaging is performed on the prediction values of the two intra prediction modes, which may improve the compression performance. Optionally, the weights of the prediction values of the two prediction modes are related to the above costs. For example, the weight is inversely proportional to the cost.

In summary, TIMD uses prediction effects of the intra prediction modes on the template to screen the intra prediction modes, and may weight two intra prediction modes according to the costs on the template. The advantage of TIMD lies in that if the TIMD mode is selected for the current block, there is no need to indicate, in the bitstream, which specific intra prediction mode is used, and the decoder itself achieves derivation through the above process. Thus, overhead is saved to a certain extent.

It is not difficult to find from the above simple introduction of several intra prediction modes that the technical principle of the DIMD mode is similar to the technical principle of the TIMD mode, and they both use the decoder to perform the same operation as the encoder to infer the prediction mode of the current coding unit. The prediction mode may save transmission of the index of the prediction mode in a case where the complexity is acceptable, thereby saving overhead and improving the compression efficiency. However, due to the limitation of the available reference information and the fact that there is not much part improving the prediction quality, the DIMD mode and the TIMD mode have relatively good effects in regions with large areas of consistent texture characteristics. If the texture changes slightly or the template area cannot be covered, the prediction modes have poor prediction effects.

In addition, both the DIMD mode and the TIMD mode perform fusion on the prediction blocks obtained based on a plurality of traditional prediction modes or perform weighted processing on the prediction blocks obtained based on the plurality of traditional prediction modes. The fusion of the prediction blocks may produce effects that cannot be achieved by a single prediction mode. The DIMD mode introduces the planar mode as an additional weighted prediction mode to increase the spatial correlation between the reconstruction sample and the predicted sample that are adjacent, thereby improving the prediction effect of intra prediction. However, the prediction principle of the planar mode is relatively simple, and for some prediction blocks with obvious difference at the upper right corner and the lower left corner, using the planar mode as the additional weighted prediction mode may have a counterproductive effect.

(4) Geometric partitioning mode (GPM) and angular weighted prediction (AWP)

In the video coding and decoding standards, the traditional unidirectional prediction only finds one reference block with the same size as the current block; and the traditional bidirectional prediction uses two reference blocks with the same size as the current block, and a sample value of each point of the prediction block is an average of corresponding positions of the two reference blocks (that is, all points of each reference block account for 50%). Furthermore, the bidirectional weighted prediction allows proportions of the two reference blocks to be different. For example, all points in the first reference block account for 75% and all points in the second reference block account for 25%, but all points in the same reference block have the same proportion. In addition, some optimization methods, such as decoder side motion vector refinement (DMVR) and bi-directional optical flow (BIO or BDOF), will cause some changes in the reference samples or predicted samples.

GPM or AWP also uses two reference blocks with the same size as the current block. However, some sample positions use 100% of sample values of corresponding positions of the first reference block, and some sample positions use 100% of sample values of corresponding positions of the second reference block. In a boundary area, which is also referred to as a blending area, sample values of corresponding positions of the two reference blocks are used in a certain proportion. The weights of the boundary area also transition gradually. How these weights are specifically allocated is determined by a weight derivation mode of GPM or AWP. The weight of each sample position is determined according to the weight derivation mode of GPM or AWP.

Of course, in some cases, for example, a case where a block size is very small, in some GPM or AWP modes, it cannot be ensured that some sample positions use 100% of sample values of the corresponding positions of the first reference block, and some sample positions use 100% of sample values of the corresponding positions of the second reference block. In this case, it may also be considered that GPM or AWP uses two reference blocks with different sizes from the current block (i.e., each takes a required part as the reference block), a part with a weight not equal to 0 is used as the reference block, and a part with a weight equal to 0 is eliminated. The present application does not limit specific implementations.

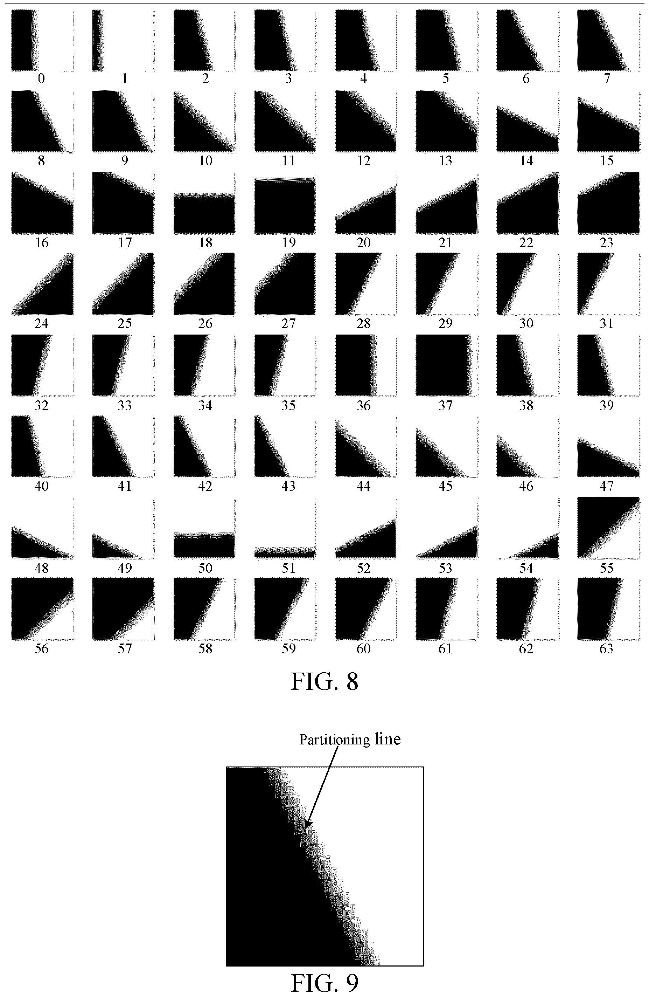

FIG. 8 is an example of weight maps corresponding to 64 weight derivation modes of GPM on a square block provided in embodiments of the present application.

As shown in FIG. 8, GPM has weight maps corresponding to 64 weight derivation modes on the square block. For a weight map corresponding to each weight derivation mode, black indicates that a weight value of a corresponding position of the first reference block is 0%, white indicates that a weight value of a corresponding position of the first reference block is 100%, and a gray area indicates that a weight value of a corresponding position of the first reference block is a certain weight value greater than 0% and less than 100% according to shade of the color. A weight value of a corresponding position of the second reference block is 100% minus the weight value of the corresponding position of the first reference block.

FIG. 9 is an example of a partitioning line of a weight derivation mode provided in embodiments of the present application.

As shown in FIG. 9, the partitioning line of the weight derivation mode may be a line composed of points of the same weight of the two prediction modes corresponding to GPM. In other words, in the weight matrix of GPM, the partitioning line is a line composed of points of the same weight of the two prediction modes corresponding to GPM. That is to say, the partitioning line may be a line composed of points of the same weight of the two prediction modes corresponding to GPM in an area where weights in the weight matrix of GPM change. In other words, the partitioning line is a line composed of points corresponding to median weights, i.e., a line composed of points with the weight being the median, where the point with the median weight may be located in the middle of the entire samples or may not be located in the middle of the entire samples. By taking weights from 0 to 8 as an example, the median weight may be 4.

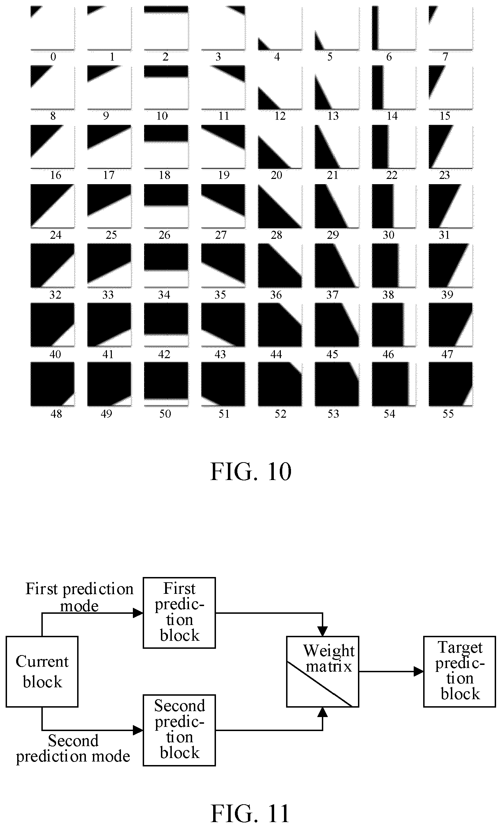

FIG. 10 is an example of weight maps corresponding to 56 weight derivation modes of AWP on a square block provided in embodiments of the present application.

As shown in FIG. 10, AWP has weight maps corresponding to 56 weight derivation modes on the square block. For a weight map corresponding to each weight derivation mode, black indicates that a weight value of a corresponding position of the first reference block is 0%, white indicates that a weight value of a corresponding position of the first reference block is 100%, and a gray area indicates that a weight value of a corresponding position of the first reference block is a certain weight value greater than 0% and less than 100% according to shade of the color. A weight value of a corresponding position of the second reference block is 100% minus the weight value of the corresponding position of the first reference block.

It should be noted that GPM and AWP may have different weight derivation methods. For example, GPM determines an angle and an offset according to each weight derivation mode, and then calculates a weight map corresponding to each weight derivation mode. AWP determines a one-dimensional weight line according to each weight derivation mode, and then spreads the one-dimensional weight lines over the entire picture using a method similar to the intra angular prediction, so as to obtain a weight map corresponding to each weight derivation mode. Of course, in other alternative embodiments, a weight map corresponding to each weight derivation mode may also be referred to as a weight matrix.

A weight derivation method will be described below by taking an example of GPM.

The encoder may determine a corresponding partitioning line according to each weight derivation mode, and then determine a corresponding weight matrix based on the partitioning line. For example, the encoder may determine a weight derivation mode merge_gpm_partition_idx, and determine an angle index variable angleIdx and a distance index variable distanceIdx that correspond to the weight derivation mode using Table 1. The angle index variable angleIdx and the distance index variable distanceIdx may be considered as variables for determining a partitioning line, i.e., determining an angle and an offset of the partitioning line respectively. After determining the partitioning line corresponding to each weight derivation mode, the encoder can determine a weight matrix corresponding to each weight derivation mode based on the partitioning line corresponding to each weight derivation mode.

Table 1

| merge_gpm_partition_idx | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| angleIdx | 0 | 0 | 2 | 2 | 2 | 2 | 3 | 3 | 3 | 3 | 4 | 4 | 4 | 4 | 5 | 5 |
| distanceIdx | 1 | 3 | 0 | 1 | 2 | 3 | 0 | 1 | 2 | 3 | 0 | 1 | 2 | 3 | 0 | 1 |
| merge_gpm_partition_idx | 16 | 17 | 18 | 19 | 20 | 21 | 22 | 23 | 24 | 25 | 26 | 27 | 28 | 29 | 30 | 31 |
| angleIdx | 5 | 5 | 8 | 8 | 11 | 11 | 11 | 11 | 12 | 12 | 12 | 12 | 13 | 13 | 13 | 13 |
| distanceIdx | 2 | 3 | 1 | 3 | 0 | 1 | 2 | 3 | 0 | 1 | 2 | 3 | 0 | 1 | 2 | 3 |
| merge_gpm_partition_idx | 32 | 33 | 34 | 35 | 36 | 37 | 38 | 39 | 40 | 41 | 42 | 43 | 44 | 45 | 46 | 47 |
| angleIdx | 14 | 14 | 14 | 14 | 16 | 16 | 18 | 18 | 18 | 19 | 19 | 19 | 20 | 20 | 20 | 21 |
| distanceIdx | 0 | 1 | 2 | 3 | 1 | 3 | 1 | 2 | 3 | 1 | 2 | 3 | 1 | 2 | 3 | 1 |
| merge_gpm_partition_idx | 48 | 49 | 50 | 51 | 52 | 53 | 54 | 55 | 56 | 57 | 58 | 59 | 60 | 61 | 62 | 63 |
| angleIdx | 21 | 21 | 24 | 24 | 27 | 27 | 27 | 28 | 28 | 28 | 29 | 29 | 29 | 30 | 30 | 30 |
| distanceIdx | 2 | 3 | 1 | 3 | 1 | 2 | 3 | 1 | 2 | 3 | 1 | 2 | 3 | 1 | 2 | 3 |

As shown in Table 1, there are 64 weight derivation modes (e.g., the 64 modes shown in FIG. 8), and indexes (merge_gpm_partition_idx) of the 64 weight derivation modes take values of 0 to 63. Each of the 64 weight derivation modes may correspond to one angle index variable angleIdx and one distance index variable distanceIdx, which means that each weight derivation mode may correspond to one partitioning line. Of course, one angle index variable angleIdx or one distance index variable distanceIdx may correspond to index(es) of one or more weight derivation modes. Table 1 is only an example of the present application and should not be construed as the limitation on the present application.

Since three components (e.g., Y, Cb and Cr) may all use GPM, a process of a component generating a prediction sample matrix of GPM may be packed into a sub-process, namely, a weighted sample prediction process of GPM. The three components each may invoke this process, but the invoked parameters are different. The luma component is taken as an example for explanation in the present application. For example, a prediction matrix predSamplesL[xL][yL] of a current luma block may be derived from the weighted sample prediction process of GPM, where xL = 0..cbWidth - 1, and yL = 0..cbHeight - 1. In addition, cbWidth is set as nCbW, and cbHeight is set as nCbH.

The inputs of the weighted sample prediction process of GPM include: a width nCbW of a current block, a height nCbH of the current block, two prediction sample matrices predSamplesLA and predSamplesLB of (nCbW) × (nCbH), an angle index variable angleIdx of "partitioning" of GPM, a distance index variable distanceIdx of GPM, and a component index variable cIdx. For example, in a case where cIdx is 0, cIdx may be used to represent the luma component. The output of the weighted sample prediction process of GPM is a GPM prediction sample matrix pbSamples[x][y] of (nCbW) × (nCbH), where x = 0..nCbW - 1, and y = 0..nCbH - 1.

The prediction sample matrix pbSamples[x][y] may be derived in the following methods.

For example, variables nW, nH, shift1, offset1, displacementX, displacementY, partFlip and shiftHor may be derived in the following methods:

nW = (cIdx = = 0) ? nCbW : nCbW * SubWidthC.

nH = (cIdx = = 0) ? nCbH : nCbH * SubHeightC.

shift1 = Max(5, 17 - BitDepth), where BitDepth is a bit depth of coding and decoding.

offset1 = 1 << (shift1 - 1).

displacementX = angleIdx.

displacementY = (angleIdx + 8) % 32.

partFlip = (angleIdx >= 13 && angleIdx <= 27) ? 0 : 1.

shiftHor = (angleIdx % 16 = = 8 ‖ (angleIdx % 16 != 0 && nH >= nW)) ? 0 : 1.

Next, variables offsetX and offsetY may be derived in the following methods.

If a value of shiftHor is 0:

offsetX = (-nW) >> 1; and offsetY = ((-nH) >> 1) + (angleIdx < 16 ? (distanceIdx * nH) >> 3 : -((distanceIdx * nH) >> 3)).

Otherwise (i.e., the value of shiftHor is 1):

offsetX = ((-nW) >> 1) + (angleIdx < 16 ? (distanceIdx * nW) >> 3 : -((distanceIdx * nW) >> 3));

and

offsetY = (- nH) >> 1.

Then, the prediction sample matrix pbSamples[x][y] may be derived in the following methods, where x = 0..nCbW - 1 and y = 0..nCbH - 1.

Variables xL and yL are derived in the following methods.

xL = (cIdx = = 0) ? x : x * SubWidthC;

yL = (cIdx = = 0) ? y : y * SubHeightC; and weightIdx = (((xL + offsetX) << 1) + 1) * disLut[displacementX] + (((yL + offsetY) << 1) + 1) * disLut[displacementY].

The disLut[displacementX] may be obtained through Table 2.

Table 2

| idx | 0 | 2 | 3 | 4 | 5 | 6 | 8 | 10 | 11 | 12 | 13 | 14 |
|---|---|---|---|---|---|---|---|---|---|---|---|---|
| disLut[idx] | 8 | 8 | 8 | 4 | 4 | 2 | 0 | -2 | -4 | -4 | -8 | -8 |
| idx | 16 | 18 | 19 | 20 | 21 | 22 | 24 | 26 | 27 | 28 | 29 | 30 |
| disLut[idx] | -8 | -8 | -8 | -4 | -4 | -2 | 0 | 2 | 4 | 4 | 8 | 8 |

weightIdxL = partFlip ? 32 + weightIdx : 32 - weightIdx;

wValue = Clip3(0, 8, (weightIdxL + 4) >> 3); and pbSamples[x][y] = Clip3(0, (1 << BitDepth) - 1, (predSamplesLA[x][y] * wValue + predSamplesLB[x][y] * (8 - wValue) + offset1) >> shift1).

Where pbSamples[x][y] represents a prediction sample of a point (x, y), wValue represents a weight of a prediction value predSamplesLA[x][y] of a prediction matrix of a prediction mode at the point (x, y), and (8 - wValue) is a weight of a prediction value predSamplesLB[x][y] of a prediction matrix of another prediction mode at the point (x, y).

It should be noted that, for a weight derivation mode, a weight value wValue may be derived for each point using the weight derivation mode, and then a prediction value pbSamples[x][y] of GPM may be calculated. In this way, there is no need to write the weight wValue as a matrix form. However, it can be understood that, if wValue of each position is saved in a matrix, then the matrix is a weight matrix. A prediction value of GPM is obtained by calculating a weight of each point and performing weighting separately, or a prediction sample matrix of GPM is obtained by calculating all weights and performing unified weighting, which are the same in principle. The term "weight matrix" used in many descriptions of the article is to make the expression easy to be understood, and drawing with a weight matrix is more intuitive. In fact, it may also be described according to the weight of each position. For example, a weight matrix derivation mode may also be referred to as a weight derivation mode, which is not specifically limited in the present application.

In addition, partitioning for CUs, partitioning for PUs and partitioning for TUs all belong to a rectangular-based partitioning method. However, GPM and AWP achieve predicted non-rectangular partitioning effects without partitioning. GPM and AWP use a mask of weights of two reference blocks, i.e., the weight map or the weight matrix mentioned above. The mask determines the weights of the two reference blocks when they generate the prediction block; or it can be simply understood that part of the positions of the prediction block is from the first reference block and part of the positions is from the second reference block, and the blending area is obtained by weighting the corresponding positions of the two reference blocks, so as to make the transition smoother. GPM and AWP do not partition the current block into two CUs or two PUs, and therefore, transform, quantization, inverse transform and inverse quantization of the residual after prediction are performed by using the current block as a whole.

It should be noted that GPM may combine two inter prediction blocks using the weight matrix. The present application extends GMP to combine any two prediction blocks, such as two inter prediction blocks, two intra prediction blocks, or one inter prediction block and one intra prediction block. Even in screen content coding, a prediction block of an intra block copy (IBC) mode or a prediction block of a palette mode may also be used as one or two prediction blocks. For convenience of description, in the present application, the intra mode, the inter mode, the IBC mode and the palette mode are collectively referred to as prediction modes. The prediction mode may be understood as a mode according to which the encoder and the decoder may generate information of a prediction block of a current block. For example, in the intra prediction, the prediction mode may be a certain intra prediction mode, such as a DC mode, a planar mode or a mode of various intra angular prediction modes. Of course, one or some auxiliary information, such as an optimization method for intra reference samples or an optimization method (e.g., filtering) after a preliminary prediction block is generated, may also be superimposed. For example, in the inter prediction, the prediction mode may be a merge mode, a merge with motion vector difference (MMVD) mode or an advanced motion vector prediction (AMVP) mode. For example, the prediction mode may be unidirectional prediction, bidirectional prediction or multi-hypothesis prediction. Furthermore, if the inter prediction mode uses the unidirectional prediction and a piece of motion information can be determined, the prediction block may be determined according to the motion information. If the inter prediction mode uses the bidirectional prediction and two pieces of motion information can be determined, the prediction block may be determined according to the motion information.

FIG. 11 is a schematic diagram of GPM or AWP provided in embodiments of the present application.

As shown in FIG. 11, information that GPM needs to determine may be expressed as 1 weight derivation mode and 2 prediction modes. The weight derivation mode is used to determine a weight matrix or weights, and the two prediction modes each determine a prediction block or a prediction value. The weight derivation mode is also referred to as a partitioning mode or a weight matrix derivation mode. The two prediction modes may be the same or different prediction modes, which include but are not limited to an intra prediction mode, an inter prediction mode, an IBC mode or a palette mode.

The contents related to transform of the residual block will be described below.

When encoding, a current block is predicted first, and the prediction uses spatial or temporal correlation performance to obtain a picture that is the same as or similar to the current block. For a block, it is possible that the prediction block and the current block are exactly the same, but it is difficult to guarantee that all blocks in a video are like this. Especially for a natural video or a video taken by a camera, due to factors such as complex picture texture and the presence of noise in the picture, the prediction block and the current block are usually very similar but have a difference therebetween. Moreover, due to irregular motions, distortions, occlusions and brightness changes in the video, it is difficult for the current block to be completely predicted. Therefore, the hybrid encoding framework will subtract the prediction picture from the original picture of the current block to obtain the residual picture. In other words, the residual block is obtained by subtracting the prediction block from the current block. The residual block is usually much simpler than the original picture, so that the prediction may significantly improve the compression efficiency. The residual block is not encoded directly, but is usually transformed first. The transform is to transform the residual picture from the spatial domain to the frequency domain, so as to remove correlation of the residual picture. After the residual picture is transformed to the frequency domain, since the energy is mostly concentrated in a low-frequency area, non-zero coefficients after transform are mostly concentrated in the upper left corner. Next, quantization is used to further compress. In addition, since the human eyes are not sensitive to a high frequency, a large quantization step size may be used in a high-frequency area.

The picture transform technology is a transform for an original picture in order to represent the original picture using an orthogonal function or an orthogonal matrix. The transform is two-dimensional linearly reversible. Generally, the original picture is referred to as a spatial domain picture, and the transformed picture is referred to as a transform domain picture (also called a frequency domain). The transform domain picture may be inversely transformed into the spatial domain picture. After picture transform, characteristics of the picture itself may be effectively reflected, and the energy may be concentrated on a small amount of data, which is more conducive to storage, transmission and processing of the picture.

In combination with the picture and video coding field, after obtaining the residual block, the encoder may perform transform on the residual block. The methods for the transform include, but is not limited to, discrete cosine transform (DCT) and discrete sine transform (DST). Since DCT has a strong energy concentration characteristic, only some of areas (e.g., an upper left corner area) of the original picture have non-zero coefficients after the DCT transform. Of course, in the video encoding and decoding, the picture is partitioned into blocks for processing, and thus the transform is also performed based on the block. DCT that can be used in the video coding and decoding includes, but is not limited to, DCT2-type and DCT8-type. DST that can be used in the video coding and decoding includes, but is not limited to, DST7-type. The DCT2-type is a commonly used transform in video compression standards; and the DCT8-type and DST7-type can be used in VVC. It is worth noting that the transform is very useful in general video compression, but not all blocks should be transformed. In some cases, a compression effect of transform is instead not as good as that of no transform. Therefore, in some cases, the encoder may select whether to preform transform for the current block.

When the encoder performs transform on a current block in a current picture, the transform may be performed on the residual block of the current block using a basis function or a basis picture. The basis picture is a picture representation of the basis function.

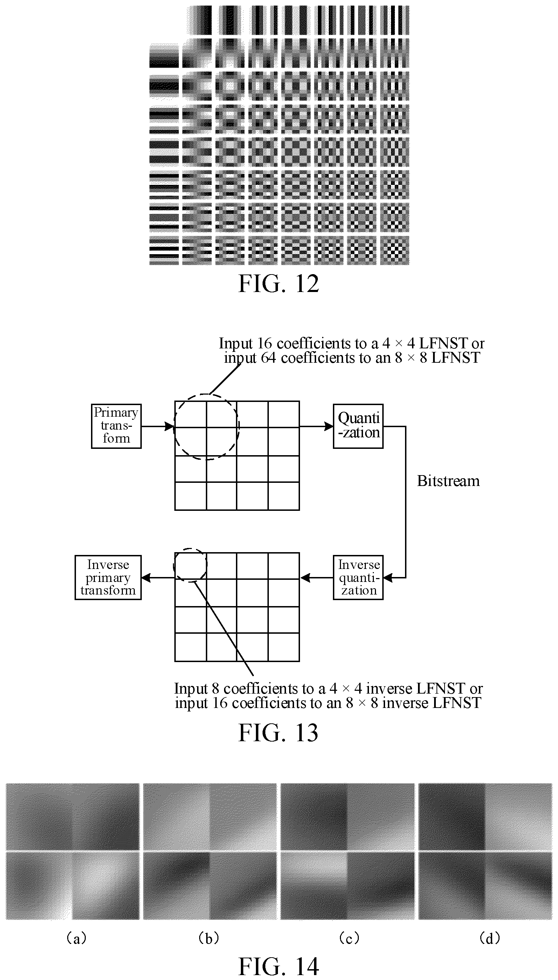

FIG. 12 is an example of a DCT2-type basis picture provided in embodiments of the present application.

As shown in FIG. 12, the DCT2-type basis picture may be a basis picture composed of $8 \times 8$ small blocks drawn based on the basis function, and each small block is composed of $8 \times 8$ elements (sub-blocks). In a specific implementation, a block with a size of $8 \times 8$ is transformed by using the basis picture composed of $8 \times 8$ small blocks to obtain an $8 \times 8$ transform coefficient matrix.

As mentioned above, in VVC, in addition to using the DCT2-type to perform primary transform on the residual block, the DCT8-type and DST7-type may also be used to perform primary transform on the residual block, which is the multiple transform selection (MTS) technology in VVC. A transform type corresponding to a basis function used by the primary transform may also be referred to as a transform core type used by the primary transform. When the encoder performs the primary transform, the most appropriate transform core type is selected based on different residual distribution characteristics to improve the compression performance. The primary transform may also be referred to as a core transform. MTS may select the transform core type through some syntax elements. MTS for selecting the transform core type through syntax elements is listed below in combination with Table 3.

Table 3

| MTS_CU_flag | MTS_Hor_flag | MTS_Ver_flag | Inter or intra | |
|---|---|---|---|---|
| | | | Horizontal direction | Vertical direction |
| 0 | | | DCT2 | |
| 1 | 0 | 0 | DST7 | DST7 |
| | 0 | 1 | DCT8 | DST7 |
| | 1 | 0 | DST7 | DCT8 |
| | 1 | 1 | DCT8 | DCT8 |

As shown in Table 3, if a value of MTS_CU_flag is 0, transform core types of the primary transform in the horizontal direction and the vertical direction are both DCT2. If the value of MTS_CU_flag is 1, a value of MTS_Hor_flag is 0, and a value of MTS_Ver_flag is 0, a transform core type in the horizontal direction uses DST7, and a transform core type in the vertical direction uses DST7.

In the VVC standard, the syntax of MTS may further be rewritten or simplified. That is, VVC determines a transform core type of the primary transform using a syntax element mts_idx.

Table 4

| mts_idx | 0 | 1 | 2 | 3 | 4 |
|---|---|---|---|---|---|
| trTypeHor | 0 | 1 | 2 | 1 | 2 |
| trTypeVer | 0 | 1 | 1 | 2 | 2 |

As shown in Table 4, trTypeHor represents a transform core type of the horizontal transform, trTypeVer represents a transform core type of the vertical transform. For trTypeHor and trTypeVer, they are 0, which represents a DCT2-type transform; they are 1, which represents a DST7-type transform; and they are 2, which represents a DCT8-type transform.

Since there is a certain correlation between the residual distribution and the intra prediction mode, the primary transform may also utilize the correlation. An approach is to group transform core types of MTS according to the intra prediction modes. An example of grouping is shown in the following table.

Table 5

| 0 | 0 <= mode <= 1 |
|---|---|
| 1 | 2 <= mode <= 12 |
| 2 | 13 <= mode <= 23 |
| 3 | 24 <= mode <= 34 |

As shown in Table 5, if an index of the intra prediction mode is 0 or 1, a transform core type group with an index 0 of MTS is selected accordingly. The mode with the index 0 in VVC is Planar, the mode with the index 1 in VVC is DC, and both DC and Planar can produce relatively flat prediction values. If an index of the intra prediction mode is from 2 to 12, a transform core type group with an index 1 of MTS is selected accordingly. It can be seen according to the diagram of the intra prediction mode that angles of 2 to 12 all point to the lower left direction.

It should be noted that, each transform core type group may have one transform core type of horizontal transform and vertical transform for selection, or have a plurality of transform core types of horizontal transform and vertical transform for selection. That is, after a transform core type group is selected according to the intra prediction mode, a further subdivision can be made. For example, a transform core type is further selected through some identification or block size information, which is not described in detail here. The key is that the primary transform can select a transform core type group according to the intra prediction mode. It can also be seen that the method of selecting the transform core type group of the primary transform according to the intra prediction mode may be able to infer a more detailed grouping of the primary transform in the future, and the present application is not specifically limited thereto.

In addition, in the present application, the transform core type involved in the core transform may also be referred to as a transform matrix, a transform type, a transform core, or any other term with similar or identical meanings; and the transform core type group involved in the core transform may also be referred to as a transform matrix group, a transform type group, a transform core group, or any other term with similar or identical meanings. The present application is not specifically limited thereto. That is to say, selection of the transform core type or the transform core type group involved in the present application may also be referred to as selection of the transform matrix or the transform matrix group, selection of the transform type or the transform type group, or selection of the transform core or the transform core group. The transform core types or the transform types may include DCT2, DCT8 and DST7, and may further include DCT5, DST4, DST1 or identity transform (IDTR).

In addition, blocks with different sizes may use transform core types with corresponding sizes, which is not described in detail in the present application.

It is worth noting that, pictures are all two-dimensional, and the computing load and memory overhead for directly performing two-dimensional transform are unacceptable to the hardware conditions. Therefore, the DCT2-type transform, DCT8-type transform and DST7-type transform are all to partition the two-dimensional transform into one-dimensional transforms in both horizontal and vertical directions, i.e., to be performed in two steps. For example, transform in the horizontal direction is performed first, and then transform in the vertical direction is performed; or transform in the vertical direction is performed first, and then transform in the horizontal direction is performed. The above transform method is more effective for textures in the horizontal and vertical directions, but has poor effect on textures in oblique directions. Since the textures in the horizontal and vertical directions are most common, the above transform method is very useful for improving the compression efficiency. However, with the development of technology, only processing of the residual of the textures in the horizontal and vertical directions is no longer meet the demand for the compression efficiency.

In light of this, the present application introduces the concept of secondary transform. That is, the encoder may perform secondary transform on the basis of the core transform (primary transform) to improve the compression efficiency.

For example, the core transform may be used to process the textures in the horizontal and vertical directions. The core transform may also be referred to as the primary transform. For example, the core transform includes, but is not limited to, the DCT2-type transform, the DCT8-type transform or the DST7-type transform as above. The secondary transform is used to process textures in oblique directions. For example, the secondary transform includes, but is not limited to, low frequency non-separable transform (LFNST). At the encoding end, the secondary transform is used after the core transform and before the quantization. At the decoding end, the secondary transform is used after the inverse quantization and before the inverse core transform.

FIG. 13 is an example of LFNST provided in embodiments of the present application.

As shown in FIG. 13, at the encoding end, LFNST performs secondary transform on low-frequency coefficients at the upper left corner after the primary transform. The core transform concentrates the energy to the upper left corner by decorrelating the picture, and the secondary transform further decorrelates the low-frequency coefficients of the core transform. At the encoding end, when 16 coefficients are input to a $4 \times 4$ LFNST, 8 coefficients are output; and when 64 coefficients are input to an $8 \times 8$ LFNST, 16 coefficients are output. At the decoding end, when 8 coefficients are input to a 4 $\times$ 4 inverse LFNST, 16 coefficients are output; and when 16 coefficients are input to an $8 \times 8$ inverse LFNST, 64 coefficients are output.

When performing secondary transform on a current block in a current picture, the encoder may perform transform on the residual block of the current block using a certain transform matrix in the selected transform matrix group. In an example where the secondary transform is LFNST, the transform matrix may refer to a matrix used to transform a texture of a certain oblique direction, and the transform matrix group may include matrices used to transform some similar textures of oblique directions.

FIG. 14 is an example of a transform matrix group of LFNST provided in embodiments of the present application.

As shown in (a) to (d) of FIG. 14, LFNST may have four groups of transform matrices, and transform matrices in the same group of transform matrices have similar oblique textures. For example, a transform matrix group shown in (a) of FIG. 14 may be a transform matrix group with an index of 0, a transform matrix group shown in (b) of FIG. 14 may be a transform matrix group with an index of 1, a transform matrix group shown in (c) of FIG. 14 may be a transform matrix group with an index of 2, and a transform matrix group shown in (d) of FIG. 14 may be a transform matrix group with an index of 3.

It should be understood that, in the present application, a transform matrix involved in the secondary transform may also be referred to as a transform core, a transform core type, a basis function, or any other term with similar or identical meanings; and a transform matrix group involved in the secondary transform may also be referred to as a transform core group, a transform core type group, a basis function group, or any other term with similar or identical meanings. The present application is not specifically limited thereto. That is to say, selection of the transform matrix or the transform matrix group involved in the present application may also be referred to as selection of the transform core type or the transform core type group, selection of the transform type or the transform type group, or selection of the transform core or the transform core group.

The relevant solutions of applying LFNST to intra-coded blocks will be described below.

The intra prediction uses reconstruction samples around a current block as references to predict the current block. Since current videos are encoded from left to right and from top to bottom, reference samples that can be used by the current block are usually on the left and the top. The angular prediction tiles the reference samples to the current block at a specified angle as the prediction value, which means that the prediction block will have obvious directional textures, and the residual of the current block after the angular prediction will also statistically show obvious angular characteristics. Therefore, the transform matrix used in LFNST may be bound to the intra prediction mode. That is, after the intra prediction mode is determined, LFNST may use a set of transform matrices with the texture direction adapted for angular characteristics of the intra prediction mode.

For example, it is assumed that LFNST has 4 groups of transform matrices in total, and each group has 2 transform matrices. Table 6 shows a correspondence between the intra prediction modes and the transform matrix groups.

Table 6

| Intra prediction mode (IntraPredMode) | Index of transform matrix group (Tr. set index) |
| --- | --- |
| IntraPredMode < 0 | 1 |
| 0 <= IntraPredMode <= 1 | 0 |
| 2 <= IntraPredMode <= 12 | 1 |
| 13 <= IntraPredMode <= 23 | 2 |
| 24 <= IntraPredMode <= 44 | 3 |
| 45 <= IntraPredMode <= 55 | 2 |
| 56 <= IntraPredMode <= 80 | 1 |
| 81 <= IntraPredMode<= 83 | 0 |

As shown in Table 6, the intra prediction modes 0 to 81 may be associated with indexes of four groups of transform matrices.

It is worth noting that, cross-component prediction modes used in chroma intra prediction are 81 to 83, while luma intra prediction does not have these modes. The transform matrix of LFNST may process more angles using one transform matrix group through transposition. For example, modes of intra prediction modes 13 to 23 and intra prediction modes 45 to 55 all correspond to a transform matrix group 2. However, the intra prediction modes 13 to 23 are obviously close to a horizontal mode, while the intra prediction modes 45 to 55 are obviously close to a vertical mode. After transform and inverse transform of modes of the intra prediction modes 45 to 55, transposition is required for adaptation.

In a specific implementation, since LFNST has 4 groups of transform matrices in total, the encoding end may determine which group of transform matrices is used in LFNST according to the intra prediction mode used by the current block, and then determine the transform matrix to be used from the determined set of transform matrices. It is equivalent to reducing transmission of a transform matrix for selecting LFNST in the bitstream by utilizing the correlation between the intra prediction modes and the transform matrix groups of LFNST. Whether the current block uses LFNST, and whether to use the first or second one in a group if the current block uses LFNST, may be determined by the bitstream and some conditions.

Of course, considering that there are 67 traditional intra prediction modes and LFNST has only 4 groups of transform matrices, a plurality of similar angular prediction modes can only correspond to one group of LFNST transform matrices, which is a compromise between performance and complexity because each transform matrix requires storage space to save the coefficients of the transform matrices. As the requirements for the compression efficiency increase and hardware capabilities improve, LFNST may also be designed to be more complex, for example, use larger transform matrices, use more transform matrix groups, and use more transform matrices in each transform matrix group. For example, Table 7 shows another correspondence between the intra prediction modes and the transform matrix groups.

Table 7

| Intra prediction mode | -14 | -13 | -12 | -11 | -10 | -9 | -8 | -7 | -6 | -5 | -4 | -3 | -2 | -1 |
|---|---|---|---|---|---|---|---|---|---|---|---|---|---|---|
| Index of transform matrix group | 2 | 2 | 2 | 2 | 2 | 2 | 2 | 2 | 2 | 2 | 2 | 2 | 2 | 2 |
| Intra prediction mode | 0 | 1 | 2 | 3 | 4 | 5 | 6 | 7 | 8 | 9 | 10 | 11 | 12 | 13 |
| Index of transform matrix group | 0 | 1 | 2 | 3 | 4 | 5 | 6 | 7 | 8 | 9 | 10 | 11 | 12 | 13 |
| Intra prediction mode | 14 | 15 | 16 | 17 | 18 | 19 | 20 | 21 | 22 | 23 | 24 | 25 | 26 | 27 |
| Index of transform matrix group | 14 | 15 | 16 | 17 | 18 | 19 | 20 | 21 | 22 | 23 | 24 | 25 | 26 | 27 |
| Intra prediction mode | 28 | 29 | 30 | 31 | 32 | 33 | 34 | 35 | 36 | 37 | 38 | 39 | 40 | 41 |
| Index of transform matrix group | 28 | 29 | 30 | 31 | 32 | 33 | 34 | 33 | 32 | 31 | 30 | 29 | 28 | 27 |
| Intra prediction mode | 42 | 43 | 44 | 45 | 46 | 47 | 48 | 49 | 50 | 51 | 52 | 53 | 54 | 55 |
| Index of transform matrix group | 26 | 25 | 24 | 23 | 22 | 21 | 20 | 19 | 18 | 17 | 16 | 15 | 14 | 13 |
| Intra prediction mode | 56 | 57 | 58 | 59 | 60 | 61 | 62 | 63 | 64 | 65 | 66 | 67 | 68 | 69 |
| Index of transform matrix group | 12 | 11 | 10 | 9 | 8 | 7 | 6 | 5 | 4 | 3 | 2 | 2 | 2 | 2 |
| Intra prediction mode | 70 | 71 | 72 | 73 | 74 | 75 | 76 | 77 | 78 | 79 | 80 | | | |
| Index of transform matrix group | 2 | 2 | 2 | 2 | 2 | 2 | 2 | 2 | 2 | 2 | 2 | | | |

As shown in Table 7, 35 transform matrix groups are used, and each transform matrix group uses 3 transform matrices. The correspondence between the transform matrix groups and the intra prediction modes may be implemented as follows: intra prediction modes 0 to 34 directly correspond to transform matrix groups 0 to 34 (that is, the larger the number of the prediction mode, the larger the index of the transform matrix group); intra prediction modes 35 to 67, due to transposition, reversely correspond to transform matrix groups 2 to 33 (that is, the larger the number of the prediction mode, the smaller the index of the transform matrix group); and the remaining prediction modes may all uniformly correspond to the transform matrix group with an index of 2. That is to say, if transposition is not considered, a single intra prediction mode corresponds to a single transform matrix group. With such a design, a residual corresponding to each intra prediction mode may obtain a more suitable LFNST transform matrix, and the compression performance may also be improved.

Of course, the wide-angular modes may also achieve one-to-one in theory, but such a design has a relatively low cost performance, and the present application will not provide further specific explanation.

In addition, for LFNST, in order to enable MIP to adapt for a transform matrix group, the transform matrix group to which the planar mode is adapted in the present application may be used as the transform matrix group adapted for the MIP.

It should be noted that LFNST is only an example of a secondary transform and should not be construed as the limitation on the secondary transform. For example, LFNST is a non-separable secondary transform. In other alternative embodiments, a separable secondary transform may be used to improve the compression efficiency of the residual of the oblique textures.

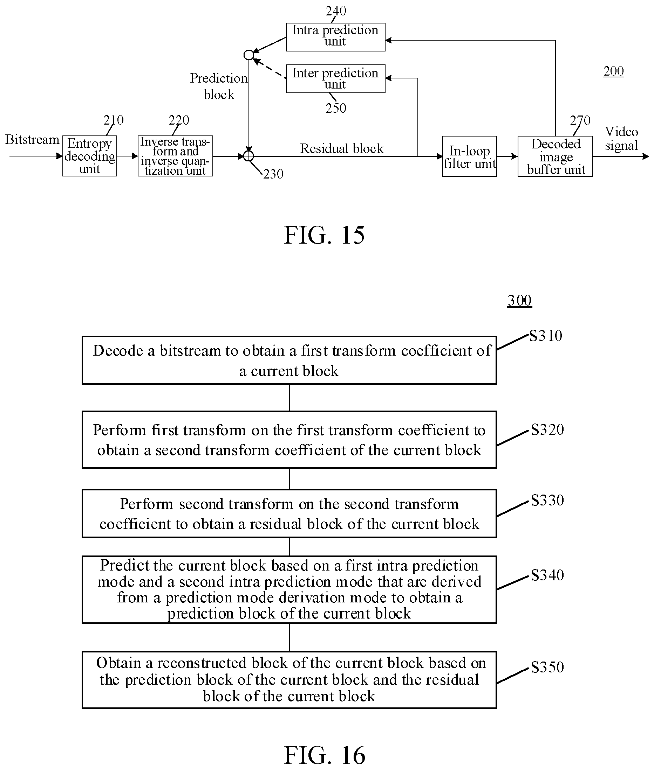

FIG. 15 is a schematic block diagram of a decoding framework 200 provided in embodiments of the present application.

As shown in FIG. 15, the decoding framework 200 may include an entropy decoding unit 210, an inverse transform and inverse quantization unit 220, a residual unit 230, an intra prediction unit 240, an inter prediction unit 250, an in-loop filter unit 260 and a decoded picture buffer unit 270.

The entropy decoding unit 210 receives and decodes a bitstream to obtain a prediction block and a frequency domain residual block. For the frequency domain residual block, the inverse transform and inverse quantization unit 220 may perform transform and inverse quantization and other steps to obtain a time domain residual block. The residual unit 230 superimposes the prediction block predicted by the intra prediction unit 240 or the inter prediction unit 250 on the time domain residual block obtained after the transform and inverse quantization performed by the inverse transform and inverse quantization unit 220 to obtain a reconstructed block.

FIG. 16 is a schematic flowchart of a decoding method 300 provided in embodiments of the present application. It should be understood that the decoding method 300 may be performed by a decoder. For example, the decoding method 300 is applied to the decoding framework 200 shown in FIG. 15. For convenience of description, the following is described by taking an example of the decoder.

As shown in FIG. 16, the decoding method 300 may include some or all of the following.

In S310, the decoder decodes a bitstream to obtain a first transform coefficient of a current block.

In S320, the decoder performs first transform on the first transform coefficient to obtain a second transform coefficient of the current block.

In S330, the decoder performs second transform on the second transform coefficient to obtain a residual block of the current block.

In S340, the decoder predicts the current block based on a first intra prediction mode and a second intra prediction mode that are derived from a prediction mode derivation mode to obtain a prediction block of the current block.

In S350, the decoder obtains a reconstructed block of the current block based on the prediction block of the current block and the residual block of the current block.

The first transform is introduced on a basis of the prediction mode derivation mode and the second transform in the present application, so as to improve a decompression efficiency of the current block.

For example, the first transform may be LFNST. That is, LFNST is combined with the prediction mode derivation mode in the present application, which may improve the compression efficiency of the residual of the oblique textures.

Of course, a method of adapting the prediction mode derivation mode for LFNST is also applicable to other secondary transform methods. For example, LFNST is a non-separable secondary transform. In other alternative embodiments, the prediction mode derivation mode is also applicable to a separable secondary transform, which is not specifically limited in the present application.

In some embodiments, the prediction mode derivation mode may include a decoder side intra mode derivation (DIMD) mode or a template-based intra mode derivation (TIMD) mode.

In some embodiments, S320 may include:

decoding the bitstream to obtain a first flag and a second flag; and
if the first flag is used to indicate that the prediction mode derivation mode is allowed to be used for predicting blocks in a current sequence, and the second flag is used to indicate that the first transform is allowed to be used for transforming the blocks in the current sequence, performing the first transform on the first transform coefficient to obtain the second transform coefficient.

For example, the current sequence is a picture sequence including the current block.

For example, the first flag may be used to control whether the current sequence uses the prediction mode derivation mode.

For example, if a value of the first flag is a first numerical value, it indicates that the prediction mode derivation mode is allowed to be used for predicting the blocks in the current sequence; and if the value of the first flag is a second numerical value, it indicates that the prediction mode derivation mode is not allowed to be used for predicting the blocks in the current sequence. As an implementation, the first numerical value is 0 and the second numerical value is 1. As another implementation, the first numerical value is 1 and the second numerical value is 0. Of course, the first numerical value or the second numerical value may also be any other value.

For example, the second flag is used to control whether the current sequence uses the first transform.

For example, if a value of the second flag is a third numerical value, it indicates that the first transform is allowed to be used for transforming the blocks in the current sequence; and if the value of the second flag is a fourth numerical value, it indicates that the first transform is not allowed to be used for transforming the blocks in the current sequence. As an implementation, the third numerical value is 0 and the fourth numerical value is 1. As another implementation, the third numerical value is 1 and the fourth numerical value is 0. Of course, the third numerical value or the fourth numerical value may also be any other value.

For example, if the first flag is represented as sps_timd/dimd_enabled_flag, and the second flag is represented as sps_lfnst_enabled_flag, in a case where the values of sps_timd/dimd_enabled_flag and sps_lfnst_enabled_flag are both 1, the first transform is performed on the first transform coefficient to obtain the second transform coefficient.

For example, if the first flag is used to indicate that the prediction mode derivation mode is not allowed to be used for predicting the blocks in the current sequence, and/or the second flag is used to indicate that the first transform is allowed to be used for transforming the blocks in the current sequence, the first transform is not performed on the first transform coefficient, or the second transform may be directly performed on the first transform coefficient to obtain the residual value of the current block.

Of course, in other alternative embodiments, the first flag and/or the second flag may also be replaced with flags of a level such as a picture, a slice, a largest coding unit (LCU), a coding tree unit (CTU), a coding unit (CU), a prediction unit (PU) or a transform unit (TU). Alternatively, on the basis of the first flag and the second flag, flags of a level such as the picture, slice, LCU, CTU, CU, PU or TU may be added to determine whether to use the prediction mode derivation mode or whether to use the first transform. The embodiments of the present application are not specifically limited thereto.

In some embodiments, S320 may include:

if the first flag is used to indicate that the prediction mode derivation mode is allowed to be used for predicting the blocks in the current sequence, and the second flag is used to indicate that the first transform is allowed to be used for transforming the blocks in the current sequence, decoding the bitstream to obtain a third flag; and
if the third flag is used to indicate that both the prediction mode derivation mode and the first transform are allowed to be applied to the blocks in the current sequence, performing the first transform on the first transform coefficient to obtain the second transform coefficient.

For example, the third flag is used to control whether the prediction mode derivation mode and the first transform can be used together.

For example, if a value of the third flag is a fifth numerical value, it indicates that both the prediction mode derivation mode and the first transform are allowed to be applied to the blocks in the current sequence; and if a value of the third flag is a sixth numerical value, both the prediction mode derivation mode and the first transform are not allowed to be applied to the blocks in the current sequence. As an implementation, the fifth numerical value is 0 and the sixth numerical value is 1. As another implementation, the fifth numerical value is 1 and the sixth numerical value is 0. Of course, the fifth numerical value or the sixth numerical value may also be any other value.

For example, if the first flag is represented as sps_timd/dimd_enabled_flag, the second flag is represented as sps_lfnst_enabled_flag, and the third flag is represented as sps_timd/dimd_lfnst_ enabled _flag, in a case where the values of sps_timd/dimd_enabled_flag and sps_lfnst_enabled_flag are both 1, it is determined whether sps_timd/-dimd_lfnst_enabled_flag is 1; and in a case where sps_timd/dimd_lfnst_enabled_flag is 1, the first transform is performed on the first transform coefficient to obtain the second transform coefficient.

Of course, in other alternative embodiments, the third flag may be replaced with an flag of a level such as a picture, a slice, a largest coding unit (LCU), a coding tree unit (CTU), a coding unit (CU), a prediction unit (PU) or a transform unit (TU). Alternatively, on the basis of the third flag, an flag of a level such as the picture, slice, LCU, CTU, CU, PU or TU may be added to determine whether to use the prediction mode derivation mode or whether to use the first transform. The embodiments of the present application are not specifically limited thereto.

In some embodiments, S320 may include:

if the first flag is used to indicate that the prediction mode derivation mode is allowed to be used for predicting the blocks in the current sequence, and the second flag is used to indicate that the first transform is allowed to be used for transforming the blocks in the current sequence, performing, by the decoder, the first transform on the first transform coefficient to obtain the second transform coefficient in a case where a height and/or a width of the current block is greater than or equal to a first threshold.

For example, if the first flag is represented as sps_timd/dimd_enabled_flag, the second flag is represented as sps_lfnst_enabled_flag, and the third flag is represented as sps_timd/dimd_lfnst_ enabled _flag, in a case where the values of sps_timd/dimd_enabled_flag and sps_lfnst_enabled_flag are both 1, the decoder determines the height and/or the width of the current block, and performs the first transform on the first transform coefficient to obtain the second transform coefficient in a case where the height and/or the width of the current block is greater than or equal to the first threshold.

For example, the first threshold may be 4, 8, 16, 32, 64 or any other value.

In some embodiments, before S320, the method 300 may further include the following.

The decoder determines a transform matrix group used in the first transform.

It should be noted that, the prediction mode derivation mode performs prediction on the current block by combining two prediction modes (i.e., the first intra prediction mode and the second intra prediction mode), and prediction blocks obtained by performing prediction on the current block using different intra prediction modes may have different texture characteristics. Therefore, if the prediction mode derivation mode is selected for the current block, it means that the first intra prediction mode may cause the prediction block of the current block to exhibit a texture characteristic, while the second intra prediction mode may cause the prediction block of the current block to exhibit another texture characteristic. In other words, after the current block is predicted, from a perspective of statistics, the residual block of the current block may also exhibit two texture characteristics. That is, the residual block of the current block does not necessarily conform to a law that can be reflected by a certain prediction mode. Therefore, for the prediction mode derivation mode, before performing the first transform on the first transform coefficient, the decoder needs to determine the transform matrix group adapted for the characteristics of the decoder. However, since the transform matrix group used in the first transform is usually a transform matrix group defined based on a single intra prediction mode, for the prediction mode derivation mode, it is necessary to further improve a relevant solution for determining the transform matrix used in the first transform. Thus, various implementations are illustratively described below.

In some embodiments, the transform matrix group used in the first transform is the same as a transform matrix group adapted for the planar mode or the direct current (DC) mode.

For example, when the decoder checks a prediction mode of the current block, if the prediction mode derivation mode is used for the current block, the decoder classifies the prediction mode derivation mode and the planar mode (or the DC mode) into one category, and adapts a transform matrix group used for the first transform according to the planar mode (or the DC mode). In other words, when the decoder checks the prediction mode of the current block, if the prediction mode derivation mode is used for the current block, the encoder may return the prediction mode of the current block as the planar mode (or the DC mode), so that the decoder determines a transform matrix group adapted for the planar mode (or the DC mode) as the transform matrix group used in the first transform. In other words, when the decoder checks the prediction mode of the current block, if the prediction mode derivation mode is used for the current block, the decoder may consider that the transform matrix group used in the first transform for the current block is a transform matrix group adapted for the planar mode (or the DC mode).

In the present embodiment, since both the planar mode (or the DC mode) and the prediction mode derivation mode can reflect a variety of texture characteristics, the transform matrix group adapted for the planar mode or the direct current (DC) mode is determined as the transform matrix group used in the first transform. Thus, not only may the current block be decoded based on the prediction mode derivation mode and the first transform, but also it may ensure that the texture characteristics of the transform matrix group used in the first transform are as close as possible to the texture characteristics of the residual block of the current block, thereby improving the decompression efficiency.

In some embodiments, the decoder determines a third intra prediction mode based on the first intra prediction mode and the second intra prediction mode, where the transform matrix group used in the first transform is the same as a transform matrix group adapted for the third intra prediction mode.

For example, the decoder may determine the transform matrix group adapted for the third intra prediction mode as the transform matrix group used in the first transform.

For example, when the decoder checks a prediction mode of the current block, if the prediction mode derivation mode is used for the current block, the decoder determines the third intra prediction mode based on the first intra prediction mode and the second intra prediction mode, and classifies the prediction mode derivation mode and the third intra prediction mode into one category, so that the decoder may adapt the transform matrix group used in the first transform according to the third intra prediction mode. In other words, when the decoder checks the prediction mode of the current block, if the prediction mode derivation mode is used for the current block, the encoder may return the prediction mode of the current block as the third intra prediction mode, so that the decoder determines a transform matrix group adapted for the third intra prediction mode as the transform matrix group used in the first transform. In other words, when the decoder checks the prediction mode of the current block, if the prediction mode derivation mode is used for the current block, the decoder may consider that the transform matrix group used in the first transform for the current block is a transform matrix group adapted for the third intra prediction mode.

Of course, in other alternative embodiments, the decoder may not first determine the third intra prediction mode explicitly, and then determine the transform matrix group used in the first transform through the third intra prediction mode. Instead, the transform matrix group adapted for the third intra prediction mode is directly used as the transform matrix group used in the first transform.

In some embodiments, the decoder determines a default prediction mode in the first intra prediction mode and the second intra prediction mode as the third intra prediction mode. Alternatively, the decoder determines the third intra prediction mode based on a weight of the first intra prediction mode and/or a weight of the second intra prediction mode. Alternatively, the decoder determines the third intra prediction mode based on a type of the first intra prediction mode and a type of the second intra prediction mode. Alternatively, the decoder determines the third intra prediction mode based on a prediction angle of the first intra prediction mode and a prediction angle of the second intra prediction mode.

For example, when the decoder checks the prediction mode of the current block, if the prediction mode derivation mode is used for the current block, the transform matrix group used in the first transform may be determined based on the first intra prediction mode and the second intra prediction mode when the transform matrix group used in the first transform is selected. As an implementation, the first intra prediction mode may be used for determining the transform matrix group used in the first transform in any case. That is, a transform matrix group adapted for the first intra prediction mode is determined as the transform matrix group used in the first transform in any case. Alternatively, the second intra prediction mode may be used for determining the transform matrix group used in the first transform in any case. That is, a transform matrix group adapted for the second intra prediction mode is determined as the transform matrix group used in the first transform in any case. As another implementation, the first intra prediction mode may be used for determining the transform matrix group used in the first transform in some cases. That is, the transform matrix group adapted for the first intra prediction mode is determined as the transform matrix group used in the first transform in some cases. Alternatively, the second intra prediction mode may be used for determining the transform matrix group used in the first transform in some cases. That is, the transform matrix group adapted for the second intra prediction mode is determined as the transform matrix group used in the first transform in some cases. And even, the planar mode or the DC mode is used for determining the transform matrix group used in the first transform in some cases. That is, a transform matrix group adapted for the planar mode or the DC mode is determined as the transform matrix group used in the first transform in some cases. The so-called determination using a certain prediction mode means that the prediction mode derivation mode and the certain prediction mode are classified into one category, so that the decoder may adapt the transform matrix group used in the first transform according to the certain prediction mode. In other words, when the decoder checks the prediction mode of the current block, if the prediction mode derivation mode is used for the current block, a certain prediction mode may be returned; and thus, the decoder may adapt the transform matrix group used in the first transform according to the certain prediction mode. In other words, when the decoder checks the prediction mode of the current block, if the prediction mode derivation mode is used for the current block, the decoder may consider that the transform matrix group used in the first transform for the current block is a transform matrix group adapted for the certain prediction mode.

In some embodiments, when the decoder determines the third intra prediction mode based on the weight of the first intra prediction mode and/or the weight of the second intra prediction mode, an intra prediction mode with the largest weight in the first intra prediction mode and the second intra prediction mode may be determined as the third intra prediction mode.

For example, when the decoder determines the third intra prediction mode based on the weight of the first intra prediction mode and/or the weight of the second intra prediction mode, a priority of an intra prediction mode with a large weight is higher than a priority of an intra prediction mode with a small weight. For example, if the weight of the first intra prediction mode is greater than the weight of the second intra prediction mode, the first intra prediction mode is determined as the third intra prediction mode; and if the weight of the second intra prediction mode is greater than the weight of the first intra prediction mode, the second intra prediction mode is determined as the third intra prediction mode.

In some embodiments, when the decoder determines the third intra prediction mode based on the type of the first intra prediction mode and the type of the second intra prediction mode, if the first intra prediction mode and the second intra prediction mode include an angular prediction mode and a non-angular prediction mode, the angular prediction mode is determined as the third intra prediction mode.

For example, when the decoder determines the third intra prediction mode based on the type of the first intra prediction mode and the type of the second intra prediction mode, a priority of the angular prediction mode as the third intra prediction mode is higher than a priority of the non-angular prediction mode as the third intra prediction mode. For example, if the first intra prediction mode is the angular prediction mode and the second intra prediction mode is the non-angular prediction mode (e.g., the planar mode or the DC mode), the first intra prediction mode (i.e., the angular prediction mode) is determined as the third intra prediction mode.

In some embodiments, if an absolute value of a difference between the prediction angle of the first intra prediction mode and the prediction angle of the second intra prediction mode is less than or equal to a second threshold, an intra prediction mode corresponding to a first prediction angle is determined as the third intra prediction mode, where the first prediction angle is determined based on the prediction angle of the first intra prediction mode and the prediction angle of the second intra prediction mode; and if the absolute value of the difference between the prediction angle of the first intra prediction mode and the prediction angle of the second intra prediction mode is greater than the second threshold, the planar mode or the direct current (DC) mode is determined as the third intra prediction mode.

For example, when the decoder determines the third intra prediction mode based on the prediction angle of the first intra prediction mode and the prediction angle of the second intra prediction mode, if the prediction angle of the first intra prediction mode and the prediction angle of the second intra prediction mode are relatively close, the decoder may determine the first intra prediction mode, the second intra prediction mode, or an intra prediction mode with a prediction angle between the prediction angle of the first intra prediction mode and the prediction angle of the second intra prediction mode as the third intra prediction mode. For example, if the difference between the prediction angle of the first intra prediction mode and the prediction angle of the second intra prediction mode is relatively large, the decoder may determine the planar mode or the DC mode as the third intra prediction mode.

In some embodiments, the decoder determines a transform matrix group adapted for the prediction mode derivation mode as the transform matrix group used in the first transform.

For example, the decoder may define an adaptive or dedicated transform matrix group for the prediction mode derivation mode.

In some embodiments, the first transform is used to process textures in the current block along oblique directions, and the second transform is used to process textures in the current block along a horizontal direction and a vertical direction.

It should be understood that the first transform at the decoding end is an inverse transform of the first transform at the encoding end, and the second transform at the decoding end is an inverse transform of the second transform at the encoding end. For example, for the encoding end, the first transform is the secondary transform as mentioned above, and the second transform is the primary transform or the core transform as mentioned above; and thus, for the decoding end, the first transform may be an inverse transform or a reverse transform of the secondary transform. For example, for the encoding end, the first transform may be an inverse LFNST, and the second transform may be a DCT2-type, a DCT8-type, or a DST7-type; and thus, for the decoder, the first transform may be an inverse (reverse) LFNST, and the second transform may be an inverse (reverse) DCT2-type, an inverse (reverse) DCT8-type, or an inverse (reverse) DST7-type.

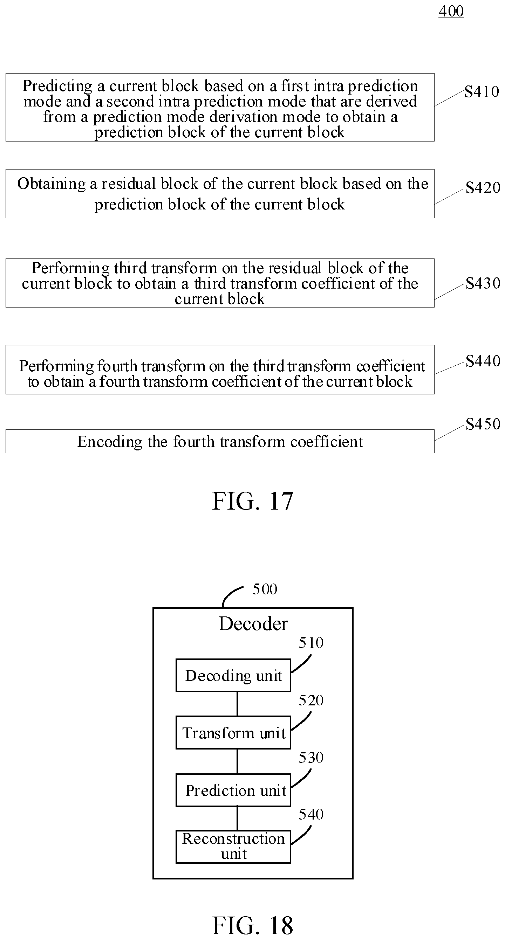

The decoding method according to the embodiments of the present application is described above in detail from the perspective of the decoder. An encoding method according to the embodiments of the present application will be described below from the perspective of an encoder with reference FIG. 17.

FIG. 17 is a schematic flowchart of an encoding method 400 provided in embodiments of the present application. It should be understood that the encoding method 400 may be performed by the encoder. For example, the encoding method 400 is applied to the encoding framework 100 shown in FIG. 1. For convenience of description, the following is described by taking an example of the encoder.

As shown in FIG. 17, the encoding method 400 may include the following.

In S410, a current block is predicted based on a first intra prediction mode and a second intra prediction mode that are derived from a prediction mode derivation mode to obtain a prediction block of the current block.

In S420, a residual block of the current block is obtained based on the prediction block of the current block.

In S430, third transform is performed on the residual block of the current block to obtain a third transform coefficient of the current block.

In S440, fourth transform is performed on the third transform coefficient to obtain a fourth transform coefficient of the current block.

In S450, the fourth transform coefficient is encoded.

It should be understood that the first transform at the decoding end is an inverse transform of the fourth transform at the encoding end, and the second transform at the decoding end is an inverse transform of the third transform at the encoding end. For example, the third transform is the primary transform or the core transform as mentioned above, and the fourth transform is the secondary transform as mentioned above. Accordingly, the first transform is an inverse transform (or reverse transform) of the secondary transform, and the second transform is an inverse transform (or reverse transform) of the primary transform or the core transform. For example, the first transform may be an inverse (reverse) LFNST, and the second transform may be an inverse (reverse) DCT2-type, an inverse (reverse) DCT8-type, or an inverse (reverse) DST7-type. Accordingly, the third transform may be a DCT2-type, a DCT8-type or a DST7-type, and the fourth transform may be a LFNST.

In some embodiments, the prediction mode derivation mode includes a decoder side intra mode derivation mode or a template-based intra mode derivation mode.

In some embodiments, S450 may include:
encoding a first flag, a second flag and the fourth transform coefficient.

The first flag is used to indicate that the prediction mode derivation mode is allowed to be used for predicting blocks in a current sequence, and the second flag is used to indicate that the fourth transform is allowed to be used for transforming the blocks in the current sequence.

In some embodiments, S450 may include:
encoding the first flag, the second flag, the fourth transform coefficient and a third flag.

The third flag is used to indicate that both the prediction mode derivation mode and the fourth transform are allowed to be applied to the blocks in the current sequence.

In some embodiments, S440 may include:
in a case where a height and/or a width of the current block is greater than or equal to a first threshold, performing the fourth transform on the third transform coefficient to obtain the fourth transform coefficient.

In some embodiments, before S440, the method 400 may further include:
determining a transform matrix group used in the fourth transform.

In some embodiments, the transform matrix group used in the fourth transform is the same as a transform matrix group adapted for a planar mode or a direct current (DC) mode.

**In** some embodiments, determining the transform matrix group used in the fourth transform includes: determining a third intra prediction mode based on the first intra prediction mode and the second intra prediction mode.

The transform matrix group used in the fourth transform is the same as a transform matrix group adapted for the third intra prediction mode.

In some embodiments, determining the third intra prediction mode based on the first intra prediction mode and the second intra prediction mode includes:

determining a default prediction mode in the first intra prediction mode and the second intra prediction mode as the third intra prediction mode; or

determining the third intra prediction mode based on a weight of the first intra prediction mode and/or a weight of the second intra prediction mode; or

determining the third intra prediction mode based on a type of the first intra prediction mode and a type of the second intra prediction mode; or

determining the third intra prediction mode based on a prediction angle of the first intra prediction mode and a prediction angle of the second intra prediction mode.

In some embodiments, determining the third intra prediction mode based on the weight of the first intra prediction mode and/or the weight of the second intra prediction mode, includes:

determining an intra prediction mode with a largest weight in the first intra prediction mode and the second intra prediction mode as the third intra prediction mode.

In some embodiments, determining the third intra prediction mode based on the type of the first intra prediction mode and the type of the second intra prediction mode, includes:

if the first intra prediction mode and the second intra prediction mode include an angular prediction mode and a non-angular prediction mode, determining the angular prediction mode as the third intra prediction mode.

In some embodiments, determining the third intra prediction mode based on the prediction angle of the first intra prediction mode and the prediction angle of the second intra prediction mode, includes:

if an absolute value of a difference between the prediction angle of the first intra prediction mode and the prediction angle of the second intra prediction mode is less than or equal to a second threshold, determining an intra prediction mode corresponding to a first prediction angle as the third intra prediction mode, where the first prediction angle is determined based on the prediction angle of the first intra prediction mode and the prediction angle of the second intra prediction mode; and

if the absolute value of the difference between the prediction angle of the first intra prediction mode and the prediction angle of the second intra prediction mode is greater than the second threshold, determining a planar mode or a direct current (DC) mode as the third intra prediction mode.

In some embodiments, determining the transform matrix group used in the fourth transform, includes: determining a transform matrix group adapted for the prediction mode derivation mode as the transform matrix group used in the fourth transform.

In some embodiments, the fourth transform is used to process textures in the current block along oblique directions, and the third transform is used to process textures in the current block along a horizontal direction and a vertical direction.

It should be understood that the encoding method may be understood as an inverse process of the decoding method. Therefore, for the specific scheme of the encoding method 400, reference may be made to the relevant content of the decoding method 300. For convenience of description, details are not repeated in the present application.

The preferred implementations of the present application are described above in detail with reference to the accompanying drawings. However, the present application is not limited to the specific details in the above implementations. Various simple variations may be made to the technical solutions of the present application within the technical concept of the present application, and these simple variations all fall within the protection scope of the present application. For example, various specific technical features described in the foregoing specific implementations may be combined in any suitable manner without contradiction. In order to avoid unnecessary repetition, various possible combinations will not be further described in the present application. As another example, different implementations of the present application may also be combined arbitrarily, and the combinations should be regarded as the contents disclosed in the present application as long as the combinations do not violate the concept of the present application. It should also be understood that in various method embodiments in the present application, the magnitude of the serial numbers of the above processes does not mean the order of execution. The execution order of the processes should be determined based on functions and internal logic, and should not constitute any limitation on the implementation process of the embodiments of the present application.

The method embodiments of the present application are described in detail above. The device embodiments of the present application are described in detail below with reference to FIGS. 18 to 20.

FIG. 18 is a schematic block diagram of a decoder 500 in embodiments of the present application.

As shown in FIG. 18, the decoder 500 may include:

a decoding unit 510 configured to decode a bitstream to obtain a first transform coefficient of a current block;
a transform unit 520 configured to:

perform first transform on the first transform coefficient to obtain a second transform coefficient of the current block; and
perform second transform on the second transform coefficient to obtain a residual block of the current block;
a prediction unit 530 configured to predict the current block based on a first intra prediction mode and a second intra prediction mode that are derived from a prediction mode derivation mode to obtain a prediction block of the current block; and
a reconstruction unit 540 configured to obtain a reconstructed block of the current block based on the prediction block of the current block and the residual block of the current block.

In some embodiments, the prediction mode derivation mode includes a decoder side intra mode derivation mode or a template-based intra mode derivation mode.

In some embodiments, the transform unit 520 is specifically configured to:

decode the bitstream to obtain a first flag and a second flag; and
if the first flag is used to indicate that the prediction mode derivation mode is allowed to be used for predicting blocks in a current sequence, and the second flag is used to indicate that the first transform is allowed to be used for transforming the blocks in the current sequence, perform the first transform on the first transform coefficient to obtain the second transform coefficient.

In some embodiments, the transform unit 520 is specifically configured to:

if the first flag is used to indicate that the prediction mode derivation mode is allowed to be used for predicting the blocks in the current sequence, and the second flag is used to indicate that the first transform is allowed to be used for transforming the blocks in the current sequence, decode the bitstream to obtain a third flag; and
if the third flag is used to indicate that both the prediction mode derivation mode and the first transform are allowed to be applied to the blocks in the current sequence, perform the first transform on the first transform coefficient to obtain the second transform coefficient.

In some embodiments, the transform unit 520 is specifically configured to:
if the first flag is used to indicate that the prediction mode derivation mode is allowed to be used for predicting the blocks in the current sequence, and the second flag is used to indicate that the first transform is allowed to be used for transforming the blocks in the current sequence, perform the first transform on the first transform coefficient to obtain the second transform coefficient in a case where a height and/or a width of the current block is greater than or equal to a first threshold.

In some embodiments, before performing the second transform on the second transform coefficient to obtain the residual block of the current block, the transform unit 520 is further configured to:
determine a transform matrix group used in the first transform.

In some embodiments, the transform unit 520 is specifically configured to:

In some embodiments, the transform matrix group used in the first transform is the same as a transform matrix group adapted for a planar mode or a direct current (DC) mode.

In some embodiments, the transform unit 520 is specifically configured to:

determine a third intra prediction mode based on the first intra prediction mode and the second intra prediction mode, where the transform matrix group used in the first transform is the same as a transform matrix group adapted for the third intra prediction mode.

In some embodiments, the transform unit 520 is specifically configured to:

determine a default prediction mode in the first intra prediction mode and the second intra prediction mode as the third intra prediction mode; or

determine the third intra prediction mode based on a weight of the first intra prediction mode and/or a weight of the second intra prediction mode; or

determine the third intra prediction mode based on a type of the first intra prediction mode and a type of the second intra prediction mode; or

determine the third intra prediction mode based on a prediction angle of the first intra prediction mode and a prediction angle of the second intra prediction mode.

In some embodiments, the transform unit 520 is specifically configured to:
determine an intra prediction mode with a largest weight in the first intra prediction mode and the second intra prediction mode as the third intra prediction mode.

In some embodiments, the transform unit 520 is specifically configured to:
if the first intra prediction mode and the second intra prediction mode include an angular prediction mode and a non-angular prediction mode, determine the angular prediction mode as the third intra prediction mode.

In some embodiments, the transform unit 520 is specifically configured to:

if an absolute value of a difference between the prediction angle of the first intra prediction mode and the prediction angle of the second intra prediction mode is less than or equal to a second threshold, determine an intra prediction mode corresponding to a first prediction angle as the third intra prediction mode, where the first prediction angle is determined based on the prediction angle of the first intra prediction mode and the prediction angle of the second intra prediction mode; and

if the absolute value of the difference between the prediction angle of the first intra prediction mode and the prediction angle of the second intra prediction mode is greater than the second threshold, determine a planar mode or a direct current (DC) mode as the third intra prediction mode.

In some embodiments, the transform unit 520 is specifically configured to:
determine a transform matrix group adapted for the prediction mode derivation mode as the transform matrix group used in the first transform.

In some embodiments, the first transform is used to process textures in the current block along oblique directions, and the second transform is used to process textures in the current block along a horizontal direction and a vertical direction.

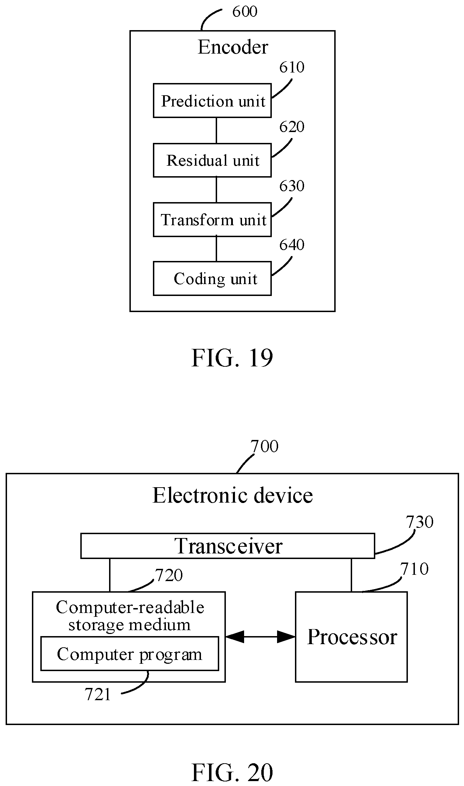

FIG. 19 is a schematic block diagram of an encoder 600 in embodiments of the present application.

As shown in FIG. 19, the encoder 600 may include:

a prediction unit 610 configured to predict a current block based on a first intra prediction mode and a second intra prediction mode that are derived from a prediction mode derivation mode to obtain a prediction block of the current block;

a residual unit 620 configured to obtain a residual block of the current block based on the prediction block of the current block;

a transform unit 630 configured to:

perform third transform on the residual block of the current block to obtain a third transform coefficient of the current block; and

perform fourth transform on the third transform coefficient to obtain a fourth transform coefficient of the current block; and

a coding unit 640 configured to encode the fourth transform coefficient.

In some embodiments, the prediction mode derivation mode includes a decoder side intra mode derivation mode or a template-based intra mode derivation mode.

In some embodiments, the coding unit 640 is specifically configured to:

encode a first flag, a second flag and the fourth transform coefficient,

where the first flag is configured to indicate that the prediction mode derivation mode is allowed to be used for predicting blocks in a current sequence, and the second flag is configured to indicate that the fourth transform is allowed to be used for transforming the blocks in the current sequence.

In some embodiments, the coding unit 640 is specifically configured to:

encode the first flag, the second flag, the fourth transform coefficient and a third flag,

where third flag is configured to indicate that both the prediction mode derivation mode and the fourth transform are allowed to be applied to the blocks in the current sequence.

In some embodiments, the transform unit 630 is specifically configured to:
in a case where a height and/or a width of the current block is greater than or equal to a first threshold, perform the fourth transform on the third transform coefficient to obtain the fourth transform coefficient.

In some embodiments, before performing the fourth transform on the third transform coefficient to obtain the fourth transform coefficient of the current block, the transform unit 630 is further configured to:
determine a transform matrix group used in the fourth transform.

In some embodiments, the transform matrix group used in the fourth transform is the same as a transform matrix group adapted for a planar mode or a direct current (DC) mode.

In some embodiments, the transform unit 630 is specifically configured to:

determine a third intra prediction mode based on the first intra prediction mode and the second intra prediction mode, where the transform matrix group used in the fourth transform is the same as a transform matrix group adapted for the third intra prediction mode.

In some embodiments, the transform unit 630 is specifically configured to:

determine a default prediction mode in the first intra prediction mode and the second intra prediction mode as the third intra prediction mode; or
determine the third intra prediction mode based on a weight of the first intra prediction mode and/or a weight of the second intra prediction mode; or
determine the third intra prediction mode based on a type of the first intra prediction mode and a type of the second intra prediction mode; or
determine the third intra prediction mode based on a prediction angle of the first intra prediction mode and a prediction angle of the second intra prediction mode.

In some embodiments, the transform unit 630 is specifically configured to:
determine an intra prediction mode with a largest weight in the first intra prediction mode and the second intra prediction mode as the third intra prediction mode.

In some embodiments, the transform unit 630 is specifically configured to:
if the first intra prediction mode and the second intra prediction mode include an angular prediction mode and a non-angular prediction mode, determine the angular prediction mode as the third intra prediction mode.

In some embodiments, the transform unit 630 is specifically configured to:

if an absolute value of a difference between the prediction angle of the first intra prediction mode and the prediction angle of the second intra prediction mode is less than or equal to a second threshold, determine an intra prediction mode corresponding to a first prediction angle as the third intra prediction mode, where the first prediction angle is determined based on the prediction angle of the first intra prediction mode and the prediction angle of the second intra prediction mode; and
if the absolute value of the difference between the prediction angle of the first intra prediction mode and the prediction angle of the second intra prediction mode is greater than the second threshold, determine a planar mode or a direct current (DC) mode as the third intra prediction mode.

In some embodiments, the transform unit 630 is specifically configured to:
determine a transform matrix group adapted for the prediction mode derivation mode as the transform matrix group used in the fourth transform.

In some embodiments, the fourth transform is used to process textures in the current block along oblique directions, and the third transform is used to process textures in the current block along a horizontal direction and a vertical direction.

It should be understood that the device embodiments and the method embodiments may correspond to each other, and for the similar descriptions, reference may be made to the method embodiments. To avoid repetition, details are not repeated here. Specifically, the decoder 500 shown in FIG. 18 may correspond to the corresponding body for performing the method 300 in the embodiments of the present application, and aforementioned and other operations and/or functions of the units in the decoder 500 are for implementing the corresponding processes in the steps in the method 300. Similarly, the encoder 600 shown in FIG. 19 may correspond to the corresponding body for performing the method 400 in the embodiments of the present application. That is, aforementioned and other operations and/or functions of the units in the encoder 600 are for implementing the corresponding processes in the steps in the method 400.

It should also be understood that the units in the decoder 500 or encoder 600 involved in the embodiments of the present application may be merged separately or completely into one or several additional units, or a certain one (some) of the units may further be partitioned into smaller functional units. In this way, the same operations may be achieved without affecting realization of the technical effects of the embodiments of the present application. The above units are partitioned based on logical functions. In practical applications, a function of a unit may be implemented by multiple units, or functions of multiple units may be implemented by a unit. In other embodiments of the present application, the decoder 500 or the encoder 600 may further include other units. In practical applications, these functions may also be implemented with the assistance of other units, and may be implemented by collaboration of multiple units. According to another embodiment of the present application, by running a computer program (including program codes) capable of performing steps involved in the corresponding method on a general-purpose computing device of a general-purpose computer including a processing element (e.g., a central processing unit (CPU)) and storage elements such as a random access storage medium (random access memory, RAM) and a read-only storage medium (read-only memory, ROM), the decoder 500 or encoder 600 involved in the embodiments of the present application may be constructed, and the encoding method or the decoding method in the embodiments of the present application may be implemented. The computer program may be recorded on, for example, a computer-readable storage medium, loaded into an electronic device through the computer-readable storage medium, and run in the electronic device to implement the corresponding method in the embodiments of the present application.

In other words, the units mentioned above may be implemented in the form of hardware, or implemented by instructions in the form of software, or implemented in the form of a combination of software and hardware. Specifically, each step of the method embodiments in the embodiments of the present application may be completed by the integrated logic circuit of the hardware in the processor and/or the instructions in the form of software. The steps of the method disclosed in the embodiments of the present application may be directly reflected as being executed by a hardware decoding processor, or being executed by a combination of hardware in the decoding processor and software. Optionally, the software may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the above method embodiments in combination with the hardware.

FIG. 20 is a schematic structural diagram of an electronic device 700 provided in embodiments of the present application.

As shown in FIG. 20, the electronic device 700 includes at least a processor 710 and a computer-readable storage medium 720. The processor 710 and the computer-readable storage medium 720 may be connected by a bus or other manners. The computer-readable storage medium 720 is configured to store a computer program 721. The computer program 721 includes computer instructions. The processor 710 is configured to execute the computer instructions stored in the computer-readable storage medium 720. The processor 710 is a computing core and control core of the electronic device 700, which is suitable for implementing one or more computer instructions, and is specifically suitable for loading and executing one or more computer instructions to implement corresponding method process(es) or corresponding function(s).

As an example, the processor 710 may also be referred to as a central processing unit (CPU). The processor 710 may include, but is not limited to, a general-purpose processor, a digital signal processor (DSP), an application specific integrated circuit (ASIC), a field programmable gate array (FPGA) or any other programmable logic device, a discrete gate or transistor logic device, a discrete hardware component, or the like.

As an example, the computer-readable storage medium 720 may be a high-speed RAM memory, or a non-unstable memory (non-volatile memory) such as at least one disk memory. Optionally, the computer-readable storage medium 720 may also be at least one computer-readable storage medium located away from the aforementioned processor 710. Specifically, the computer-readable storage medium 720 includes, but is not limited to, a volatile memory and/or a non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM), which serves as an external cache. As an example, but not as a limitation, many forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM).

In an implementation, the electronic device 700 may be an encoder or encoding framework involved in embodiments of the present application. The computer-readable storage medium 720 has stored first computer instructions therein. The first computer instructions stored in the computer-readable storage medium 720 are loaded and executed by the processor 710 to implement the corresponding steps in the encoding method provided in embodiments of the present application. In other words, the processor 710 loads the first computer instructions in the computer-readable storage medium 720 and performs the corresponding steps, which will not be repeated here, so as to avoid repetition.

In an implementation, the electronic device 700 may be a decoder or decoding framework involved in embodiments of the present application. The computer-readable storage medium 720 has stored second computer instructions therein. The second computer instructions stored in the computer-readable storage medium 720 are loaded and executed by the processor 710 to implement the corresponding steps in the decoding method provided in embodiments of the present application. In other words, the second computer instructions in the computer-readable storage medium 720 are loaded by the processor 710 and the corresponding steps are executed, which will not be repeated here, for avoiding repetition.

In another aspect of the present application, embodiments of the present application further provide a coding and decoding system. The coding and decoding system includes the encoder and the decoder mentioned above.

In another aspect of the present application, embodiments of the present application further provide a computer-readable storage medium (memory). The computer-readable storage medium is a memory device in the electronic device 700 and is configured to store programs and data, which is, for example, the computer-readable storage medium 720. It can be understood that the computer-readable storage medium 720 herein may include both a built-in storage medium in the electronic device 700 and an extended storage medium supported by the electronic device 700. The computer-readable storage medium provides a storage space, and the storage space stores an operating system of the electronic device 700. Furthermore, the storage space further stores one or more computer instructions suitable for being loaded and executed by the processor 710. These computer instructions may be one or more computer programs 721 (including program codes).

In another aspect of the present application, a computer program product or a computer program is provided. The computer program product or the computer program includes computer instructions, and the computer instructions are stored in a computer-readable storage medium. For example, the computer program is the computer program 721. In this case, the data processing device 700 may be a computer. The processor 710 reads the computer instructions from the computer-readable storage medium 720, and the processor 710 executes the computer instructions, so that the computer performs the encoding method or decoding method provided in the above various optional methods.

In other words, when implemented using software, all or part of the above embodiments may be implemented in the form of a computer program product. The computer program product includes one or more computer instructions. When the computer program instruction(s) are loaded and executed on a computer, the processes or functions described in the embodiments of the present application are run in whole or in part. The computer may be a general-purpose computer, a special purpose computer, a computer network, or any other programmable device. The computer instruction(s) may be stored in a computer-readable storage medium, or transmitted from a computer-readable storage medium to another computer-readable storage medium. For example, the computer instruction(s) may be transmitted from a website, computer, server, or data center to another website, computer, server, or data center via a wired manner (e.g., coaxial cable, optical fiber, or digital subscriber line (DSL)) or a wireless manner (e.g., infrared, wireless, or microwave).

Those of ordinary skills in the art will recognize that units and process steps of various examples described in combination with the embodiments disclosed herein can be implemented in electronic hardware, or a combination of computer software and electronic hardware. Whether these functions are implemented in a form of hardware or software depends on a specific application and a design constraint of a technical solution. Those skilled in the art may use different methods to implement the described functions for each specific application, but such implementation should not be considered to be beyond the scope of the present application.

Finally, it should be noted that the above contents are merely specific implementations of the present disclosure, but the protection scope of the present application is not limited thereto. Variations or replacements that any person skilled in the art could readily conceive of within the technical scope disclosed in the present application shall be included in the protection scope of the present application. Therefore, the protection scope of the present application should be subject to the protection scope of the claims.

## Claims

**1.** A decoding method, comprising:

decoding a bitstream to obtain a first transform coefficient of a current block;
performing first transform on the first transform coefficient to obtain a second transform coefficient of the current block;
performing second transform on the second transform coefficient to obtain a residual block of the current block;
predicting the current block based on a first intra prediction mode and a second intra prediction mode that are derived from a prediction mode derivation mode to obtain a prediction block of the current block; and
obtaining a reconstructed block of the current block based on the prediction block of the current block and the residual block of the current block.

2. The method according to claim 1, wherein the prediction mode derivation mode comprises a decoder side intra mode derivation mode or a template-based intra mode derivation mode.

3. The method according to claim 1 or 2, wherein performing the second transform on the second transform coefficient to obtain the residual block of the current block, comprises:

   decoding the bitstream to obtain a first flag and a second flag; and
   if the first flag is used to indicate that the prediction mode derivation mode is allowed to be used for predicting blocks in a current sequence, and the second flag is used to indicate that the first transform is allowed to be used for transforming the blocks in the current sequence, performing the first transform on the first transform coefficient to obtain the second transform coefficient.

4. The method according to claim 3, wherein performing the first transform on the first transform coefficient to obtain the second transform coefficient of the current block, comprises:

   if the first flag is used to indicate that the prediction mode derivation mode is allowed to be used for predicting the blocks in the current sequence, and the second flag is used to indicate that the first transform is allowed to be used for transforming the blocks in the current sequence, decoding the bitstream to obtain a third flag; and
   if the third flag is used to indicate that both the prediction mode derivation mode and the first transform are allowed to be applied to the blocks in the current sequence, performing the first transform on the first transform coefficient to obtain the second transform coefficient.

5. The method according to claim 3, wherein performing the first transform on the first transform coefficient to obtain the second transform coefficient of the current block, comprises:
   if the first flag is used to indicate that the prediction mode derivation mode is allowed to be used for predicting the blocks in the current sequence, and the second flag is used to indicate that the first transform is allowed to be used for transforming the blocks in the current sequence, performing the first transform on the first transform coefficient to obtain the second transform coefficient in a case where a height and/or a width of the current block is greater than or equal to a first threshold.

6. The method according to any one of claims 1 to 5, wherein before performing the second transform on the second transform coefficient to obtain the residual block of the current block, the method further comprises:
   determining a transform matrix group used in the first transform.

7. The method according to claim 6, wherein the transform matrix group used in the first transform is same as a transform matrix group adapted for a planar mode or a direct current (DC) mode.

8. The method according to claim 6, wherein determining the transform matrix group used in the first transform, comprises:

   determining a third intra prediction mode based on the first intra prediction mode and the second intra prediction mode, wherein
   the transform matrix group used in the first transform is same as a transform matrix group adapted for the third intra prediction mode.

9. The method according to claim 8, wherein determining the third intra prediction mode based on the first intra prediction mode and the second intra prediction mode, comprises:

   determining a default prediction mode in the first intra prediction mode and the second intra prediction mode as the third intra prediction mode; or
   determining the third intra prediction mode based on a weight of the first intra prediction mode and/or a weight of the second intra prediction mode; or
   determining the third intra prediction mode based on a type of the first intra prediction mode and a type of the second intra prediction mode; or
   determining the third intra prediction mode based on a prediction angle of the first intra prediction mode and a prediction angle of the second intra prediction mode.

10. The method according to claim 9, wherein determining the third intra prediction mode based on the weight of the first intra prediction mode and/or the weight of the second intra prediction mode, comprises:
determining an intra prediction mode with a largest weight in the first intra prediction mode and the second intra prediction mode as the third intra prediction mode.

11. The method according to claim 9, wherein determining the third intra prediction mode based on the type of the first intra prediction mode and the type of the second intra prediction mode, comprises:
if the first intra prediction mode and the second intra prediction mode include an angular prediction mode and a non-angular prediction mode, determining the angular prediction mode as the third intra prediction mode.

12. The method according to claim 9, wherein determining the third intra prediction mode based on the prediction angle of the first intra prediction mode and the prediction angle of the second intra prediction mode, comprises:

if an absolute value of a difference between the prediction angle of the first intra prediction mode and the prediction angle of the second intra prediction mode is less than or equal to a second threshold, determining an intra prediction mode corresponding to a first prediction angle as the third intra prediction mode, wherein the first prediction angle is determined based on the prediction angle of the first intra prediction mode and the prediction angle of the second intra prediction mode; and
if the absolute value of the difference between the prediction angle of the first intra prediction mode and the prediction angle of the second intra prediction mode is greater than the second threshold, determining a planar mode or a direct current (DC) mode as the third intra prediction mode.

13. The method according to claim 6, wherein determining the transform matrix group used in the first transform, comprises:
determining a transform matrix group adapted for the prediction mode derivation mode as the transform matrix group used in the first transform.

14. The method according to any one of claims 1 to 13, wherein the first transform is used to process textures in the current block along oblique directions, and the second transform is used to process textures in the current block along a horizontal direction and a vertical direction.

15. An encoding method, comprising:

predicting a current block based on a first intra prediction mode and a second intra prediction mode that are derived from a prediction mode derivation mode to obtain a prediction block of the current block;
obtaining a residual block of the current block based on the prediction block of the current block;
performing third transform on the residual block of the current block to obtain a third transform coefficient of the current block;
performing fourth transform on the third transform coefficient to obtain a fourth transform coefficient of the current block; and
encoding the fourth transform coefficient.

16. The method according to claim 15, wherein the prediction mode derivation mode comprises a decoder side intra mode derivation mode or a template-based intra mode derivation mode.

17. The method according to claim 15 or 16, wherein encoding the fourth transform coefficient, comprises:

encoding a first flag, a second flag and the fourth transform coefficient, wherein
the first flag is used to indicate that the prediction mode derivation mode is allowed to be used for predicting blocks in a current sequence, and the second flag is used to indicate that the fourth transform is allowed to be used for transforming the blocks in the current sequence.

18. The method according to claim 17, wherein encoding the first flag, the second flag and the fourth transform coefficient, comprises:

encoding the first flag, the second flag, the fourth transform coefficient and a third flag, wherein
the third flag is used to indicate that both the prediction mode derivation mode and the fourth transform are allowed to be applied to the blocks in the current sequence.

19. The method according to any one of claims 15 to 18, wherein performing the fourth transform on the third transform coefficient to obtain the fourth transform coefficient of the current block, comprises:
in a case where a height and/or a width of the current block is greater than or equal to a first threshold, performing the fourth transform on the third transform coefficient to obtain the fourth transform coefficient.

20. The method according to any one of claims 15 to 19, wherein before performing the fourth transform on the third transform coefficient to obtain the fourth transform coefficient of the current block, the method further comprises:
determining a transform matrix group used in the fourth transform.

21. The method according to claim 20, wherein the transform matrix group used in the fourth transform is same as a transform matrix group adapted for a planar mode or a direct current (DC) mode.

22. The method according to claim 20, wherein determining the transform matrix group used in the fourth transform, comprises:

determining a third intra prediction mode based on the first intra prediction mode and the second intra prediction mode, wherein
the transform matrix group used in the fourth transform is same as a transform matrix group adapted for the third intra prediction mode.

23. The method according to claim 22, wherein determining the third intra prediction mode based on the first intra prediction mode and the second intra prediction mode, comprises:

determining a default prediction mode in the first intra prediction mode and the second intra prediction mode as the third intra prediction mode; or
determining the third intra prediction mode based on a weight of the first intra prediction mode and/or a weight of the second intra prediction mode; or
determining the third intra prediction mode based on a type of the first intra prediction mode and a type of the second intra prediction mode; or
determining the third intra prediction mode based on a prediction angle of the first intra prediction mode and a prediction angle of the second intra prediction mode.

24. The method according to claim 23, wherein determining the third intra prediction mode based on the weight of the first intra prediction mode and/or the weight of the second intra prediction mode, comprises:
determining an intra prediction mode with a largest weight in the first intra prediction mode and the second intra prediction mode as the third intra prediction mode.

25. The method according to claim 23, wherein determining the third intra prediction mode based on the type of the first intra prediction mode and the type of the second intra prediction mode, comprises:
if the first intra prediction mode and the second intra prediction mode include an angular prediction mode and a non-angular prediction mode, determining the angular prediction mode as the third intra prediction mode.

26. The method according to claim 23, wherein determining the third intra prediction mode based on the prediction angle of the first intra prediction mode and the prediction angle of the second intra prediction mode, comprises:

if an absolute value of a difference between the prediction angle of the first intra prediction mode and the prediction angle of the second intra prediction mode is less than or equal to a second threshold, determining an intra prediction mode corresponding to a first prediction angle as the third intra prediction mode, wherein the first prediction angle is determined based on the prediction angle of the first intra prediction mode and the prediction angle of the second intra prediction mode; and
if the absolute value of the difference between the prediction angle of the first intra prediction mode and the prediction angle of the second intra prediction mode is greater than the second threshold, determining a planar mode or a direct current (DC) mode as the third intra prediction mode.

27. The method according to claim 20, wherein determining the transform matrix group used in the fourth transform, comprises:
determining a transform matrix group adapted for the prediction mode derivation mode as the transform matrix group used in the fourth transform.

28. The method according to any one of claims 15 to 27, wherein the fourth transform is used to process textures in the current block along oblique directions, and the third transform is used to process textures in the current block along a horizontal direction and a vertical direction.

29. A decoder, comprising:

a decoding unit configured to decode a bitstream to obtain a first transform coefficient of a current block;
a transform unit configured to:

perform first transform on the first transform coefficient to obtain a second transform coefficient of the current block; and
perform second transform on the second transform coefficient to obtain a residual block of the current block;
a prediction unit configured to predict the current block based on a first intra prediction mode and a second intra prediction mode that are derived from a prediction mode derivation mode to obtain a prediction block of the current block; and
a reconstruction unit configured to obtain a reconstructed block of the current block based on the prediction block of the current block and the residual block of the current block.

30. An encoder, comprising:

a prediction unit configured to predict a current block based on a first intra prediction mode and a second intra prediction mode that are derived from a prediction mode derivation mode to obtain a prediction block of the current block;
a residual unit configured to obtain a residual block of the current block based on the prediction block of the current block;
a transform unit configured to:

perform third transform on the residual block of the current block to obtain a third transform coefficient of the current block; and
perform fourth transform on the third transform coefficient to obtain a fourth transform coefficient of the current block; and
a coding unit configured to encode the fourth transform coefficient.

31. An electronic device, comprising:

a processor configured to execute a computer program; and
a computer-readable storage medium, wherein the computer-readable storage medium has stored the computer program therein, and the computer program, when executed by the processor, implements the method according to any one of claims 1 to 14 or the method according to any one of claims 15 to 28.

32. A computer-readable storage medium, wherein the computer-readable storage medium is configured to store a computer program, and the computer program enables a computer to perform the method according to any one of claims 1 to 14 or the method according to any one of claims 15 to 28.

33. A computer program product, comprising a computer program/instruction, wherein the computer program/instruction, when executed by a processor, implements the method according to any one of claims 1 to 14 or the method according to any one of claims 15 to 28.

34. A bitstream, wherein the bitstream is the bitstream in the method according to any one of claims 1 to 14 or the bitstream generated in the method according to any one of claims 15 to 28.

100

Video signal → Residual block → Transform and quantization unit (120) → Transform and quantization coefficient → Entropy coding unit (130)

110

Intra prediction unit — 180

Inter prediction unit — 170

Inverse transform and inverse quantization unit — 140

Prediction block

In-loop filter unit — 150

Decoded image buffer unit — 160

**FIG. 1**

0: Planar mode
1: DC mode

**FIG. 2**

EP 4 510 588 A1

FIG. 3

FIG. 4

(a)

(b)

(c)

FIG. 5

FIG. 6

FIG. 7

FIG. 8

Partitioning line

FIG. 9

FIG. 10

FIG. 11

FIG. 12

Input 16 coefficients to a 4 × 4 LFNST or input 64 coefficients to an 8 × 8 LFNST

Input 8 coefficients to a 4 × 4 inverse LFNST or input 16 coefficients to an 8 × 8 inverse LFNST

FIG. 13

(a)  (b)  (c)  (d)

FIG. 14

240

Intra prediction
unit

200

Prediction
block

Inter prediction
unit

250

210          220

Bitstream    Entropy          Inverse trans-          Residual block          In-loop          Decoded          Video
decoding          form and                                        filter unit          image          signal
unit          inverse quan-                                                            buffer unit
          tization unit

230          270

## FIG. 15

300

| Decode a bitstream to obtain a first transform coefficient of a current block | S310 |

| Perform first transform on the first transform coefficient to obtain a second transform coefficient of the current block | S320 |

| Perform second transform on the second transform coefficient to obtain a residual block of the current block | S330 |

| Predict the current block based on a first intra prediction mode and a second intra prediction mode that are derived from a prediction mode derivation mode to obtain a prediction block of the current block | S340 |

| Obtain a reconstructed block of the current block based on the prediction block of the current block and the residual block of the current block | S350 |

## FIG. 16

400

| Predicting a current block based on a first intra prediction mode and a second intra prediction mode that are derived from a prediction mode derivation mode to obtain a prediction block of the current block | ⟋S410 |

| Obtaining a residual block of the current block based on the prediction block of the current block | ⟋S420 |

| Performing third transform on the residual block of the current block to obtain a third transform coefficient of the current block | ⟋S430 |

| Performing fourth transform on the third transform coefficient to obtain a fourth transform coefficient of the current block | ⟋S440 |

| Encoding the fourth transform coefficient | ⟋S450 |

## FIG. 17

500

Decoder

510

Decoding unit

520

Transform unit

530

Prediction unit

540

Reconstruction unit

## FIG. 18

600

| Encoder |
| --- |

| Prediction unit | 610 |

| Residual unit | 620 |

| Transform unit | 630 |

| Coding unit | 640 |

FIG. 19

700

| Electronic device |
| --- |

| Transceiver | 730 |

720

| Computer-readable storage medium |
| --- |
| Computer program |

721

| Processor | 710 |

FIG. 20

## INTERNATIONAL SEARCH REPORT

| International application No. |
| --- |
| **PCT/CN2022/086448** |

**A. CLASSIFICATION OF SUBJECT MATTER**

H04N 19/60(2014.01)i

According to International Patent Classification (IPC) or to both national classification and IPC

**B. FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS, CNTXT, ENTXTC, CNKI: 二次变换, 主变换, 编码, 解码, 编解码, 斜向, LFNST, 低频; VEN, ENTXT: code, encode, decode, primary transform, secondary transform, LFNST, coefficient

**C. DOCUMENTS CONSIDERED TO BE RELEVANT**

| Category* | Citation of document, with indication, where appropriate, of the relevant passages | Relevant to claim No. |
| --- | --- | --- |
| X | CN 111869218 A (TENCENT AMERICA LLC) 30 October 2020 (2020-10-30) description, paragraphs [0054]-[0195], and figures 5-9 and 12-14 | 1-34 |
| X | CN 110881127 A (TENCENT AMERICA LLC) 13 March 2020 (2020-03-13) description, paragraphs [0049]-[0168], and figures 4-7 | 1-34 |
| A | CN 113728640 A (BEIJING BYTEDANCE NETWORK TECHNOLOGY CO., LTD. et al.) 30 November 2021 (2021-11-30) entire document | 1-34 |
| A | CN 114073081 A (FRAUNHOFER-GESELLSCHAFT ZUR FÖRDERUNG DER ANGEWANDTEN FORSCHUNG E. V.) 18 February 2022 (2022-02-18) entire document | 1-34 |
| A | US 2020059669 A1 (PANASONIC IP CORP. AMERICA) 20 February 2020 (2020-02-20) entire document | 1-34 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **03 November 2022** | **11 November 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/086448**

| Patent document cited in search report | | | Publication date (day/month/year) | Patent family member(s) | | | Publication date (day/month/year) |
|---|---|---|---|---|---|---|---|
| CN | 111869218 | A | 30 October 2020 | KR | 20200124746 | A | 03 November 2020 |
| | | | | WO | 2019173522 | A1 | 12 September 2019 |
| | | | | EP | 3763121 | A1 | 13 January 2021 |
| | | | | JP | 2021517395 | A | 15 July 2021 |
| | | | | US | 2019281321 | A1 | 12 September 2019 |
| CN | 110881127 | A | 13 March 2020 | US | 2020084447 | A1 | 12 March 2020 |
| CN | 113728640 | A | 30 November 2021 | WO | 2020216302 | A1 | 29 October 2020 |
| | | | | US | 2022060710 | A1 | 24 February 2022 |
| CN | 114073081 | A | 18 February 2022 | WO | 2020260248 | A1 | 30 December 2020 |
| | | | | BR | 112021026284 | A2 | 03 March 2022 |
| | | | | KR | 20220036935 | A | 23 March 2022 |
| | | | | US | 2022116606 | A1 | 14 April 2022 |
| | | | | JP | 2022538853 | A | 06 September 2022 |
| | | | | EP | 3991406 | A1 | 04 May 2022 |
| | | | | TW | 202106003 | A | 01 February 2021 |
| US | 2020059669 | A1 | 20 February 2020 | US | 2022046284 | A1 | 10 February 2022 |
| | | | | WO | 2018199051 | A1 | 01 November 2018 |

Form PCT/ISA/210 (patent family annex) (January 2015)